(19) Europäisches Patentamt / European Patent Office / Office européen des brevets

(11) **EP 3 968 240 A1**

(12) **EUROPEAN PATENT APPLICATION**

(43) Date of publication:
**16.03.2022 Bulletin 2022/11**

(21) Application number: **21183116.9**

(22) Date of filing: **01.07.2021**

(51) International Patent Classification (IPC):
**G06N 5/00** *(2006.01)*    **G06N 7/00** *(2006.01)*

(52) Cooperative Patent Classification (CPC):
**G06N 5/003; G06N 7/005**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **11.09.2020 JP 2020153236**

(71) Applicant: **FUJITSU LIMITED**
**Kanagawa 211-8588 (JP)**

(72) Inventors:
• **Anazawa, Toshihisa**
  **Kanagawa, 211-8588 (JP)**
• **Shimokawa, Satoshi**
  **Kanagawa, 211-8588 (JP)**

(74) Representative: **Hoffmann Eitle**
**Patent- und Rechtsanwälte PartmbB**
**Arabellastraße 30**
**81925 München (DE)**

(54) **INFORMATION PROCESSING SYSTEM, INFORMATION PROCESSING METHOD, AND PROGRAM**

(57)     An information processing system that solves a quadratic assignment problem in which a first matrix and a second matrix are used to calculate a cost value based on an energy function of an Ising model, the information processing system includes a processing unit acquires a plurality of matrices, and performs, for a plurality of matrices, correction to add or subtract a first value to or from at least one of a first group of element values that corresponds to a first element value of the first matrix or a second group of element values that corresponds to a second element value of the second matrix, and a search unit searches for a ground state of the Ising model based on information of the energy function obtained by formulating the quadratic assignment problem based on the plurality of matrices after the correction.

FIG. 1

EP 3 968 240 A1

**Description**

[Field]

The embodiments discussed herein are related to an information processing system, an information processing method, and a program.

[Background Art]

There is an information processing device that calculates a multivariable combinatorial optimization problem, which the von Neumann type computer is not good at, by replacing the combinatorial optimization problem with an Ising model, which is a model representing the behavior of spins in a magnetic material. Techniques for solving the problem replaced with the Ising model in a practical time include, for example, a simulated annealing (SA) method and a Markov chain Monte Carlo (MCMC) method such as a replica exchange method. The combinatorial optimization problem is formulated with an energy function containing a plurality of state variables. For example, the information processing device searches for a ground state of the Ising model that minimizes a value of the energy function by repeatedly trying state transitions caused by changing values of the state variables using the MCMC method. The ground state corresponds to an optimum solution of the combinatorial optimization problem.

A practical problem example of the combinatorial optimization problem includes a quadratic assignment problem (QAP). One of the QAPs is, for example, a facility placement problem. The facility placement problem is a problem for obtaining facility placement that minimizes a cost value expressed by a sum of products of a flow such as physical distribution between facilities and a distance between positions when placing a plurality of facilities at a plurality of positions. Each of the flow between facilities and the distance between positions can be expressed using a matrix. Furthermore, a constraint condition that all facilities are placed at different positions from each other is imposed on the facility placement problem.

Note that a method of maximizing a candidate solution for a combinatorial optimization problem with a radix constraint in sparse linear discriminant analysis has been proposed. Furthermore, a method of performing discrete spectrum formulation of sparse principal component analysis using a variational eigenvalue boundary has been proposed.

[Citation List]

[Patent Literature]

[PTL 1] Japanese Laid-open Patent Publication No. 2007-317185.
[PTL 2] U.S. Patent Application Publication No. 2007/0156471 are disclosed as related art.

[Summary]

[Problem]

As described above, in the QAP, two matrices are used to calculate the cost value, and a solution that minimizes the cost value is found under the constraint condition. In the energy function, the constraint condition imposed on the problem is expressed as a constraint term for adding a penalty value for constraint violation. As the penalty value, a value that is somewhat larger than values that the cost value can take is set in advance.

Here, the value of the energy function takes a relatively large value or a relatively small value depending on presence or absence of addition of the cost value and the penalty value. If a state in which the energy function takes a relatively large value among values that the energy function can take is present, state transition across the state is stagnated in solution search, and a state that is actually searched may be limited. Therefore, the reachability to the optimum solution may be low.

Therefore, it is conceivable to adjust a range of the cost value when formulating the problem so as to make the penalty value or the value of the energy function controllable according to the cost value. For example, by reducing the range of values that the energy function can take, facilitation of the state transition can be expected. However, if the range of the cost value is changed at random, there is a possibility that the optimum solution obtained by the formulated energy function becomes different from the optimum solution that should be obtained for the original problem.

In one aspect, the present embodiments aim to provide an information processing system, an information processing method, and a program for enabling a cost value to be appropriately adjusted.

[Solution to Problem]

According to an aspect of the embodiments, an information processing system that solves a quadratic assignment problem in which a first matrix and a second matrix are used to calculate a cost value based on an energy function of an Ising model, the information processing system includes: a processing unit configured to acquire a plurality of matrices each obtained by a product of each of a plurality of element values of the first matrix and the second matrix, perform, for the plurality of matrices, correction to add or subtract a first value to or from at least one of a first group of element values that corresponds to a first element value of the first matrix or a second group of element values that corresponds to a second element value of the second matrix, and output information of the energy function obtained by formulating the quadratic assignment problem based on the plurality of matrices after the correction; and a search unit configured to search for a ground state of the Ising model based on the output information of the energy function.

[Effects of Invention]

On one aspect, the cost value can be appropriately adjusted.

[Brief Description of Drawings]

FIG. 1 is a diagram for describing an information processing system according to a first embodiment;
FIG. 2 is a diagram illustrating a first correction example;
FIG. 3 is a diagram illustrating a second correction example;
FIG. 4 is a diagram illustrating a third correction example;
FIG. 5 is a diagram illustrating a hardware example of an information processing system according to a second embodiment;
FIG. 6 is a diagram illustrating a calculation example of cost of a quadratic assignment problem;
FIG. 7 is a diagram illustrating an expression example of assignment by an Ising model;
FIG. 8 is a diagram illustrating a functional example of the information processing system;
FIG. 9 is a diagram illustrating an example of state transition in a case where an energy function includes a constraint term;
FIG. 10 is graphs illustrating examples of an energy barrier in a search;
FIG. 11 is a diagram illustrating an expansion example by a product of a flow matrix and a distance matrix;
FIG. 12 is a diagram illustrating an example of expanding an optimum solution into a column vector;
FIG. 13 is a diagram illustrating an example of element values selected in the optimum solution;
FIG. 14 is a diagram illustrating a correction example of element values (No. 1);
FIG. 15 is a diagram illustrating a correction example of element values (No. 2);
FIG. 16 is a diagram illustrating an example of a submatrix group after conversion;
FIG. 17 is a diagram illustrating an example of smoothing of a search space;
FIG. 18 is a flowchart illustrating a processing example of the information processing system; and
FIG. 19 is a diagram illustrating an example of a combination of a group operation type and a modulation pattern.

[Description of Embodiments]

Hereinafter, the present embodiments will be described with reference to the drawings.

[First Embodiment]

A first embodiment will be described.

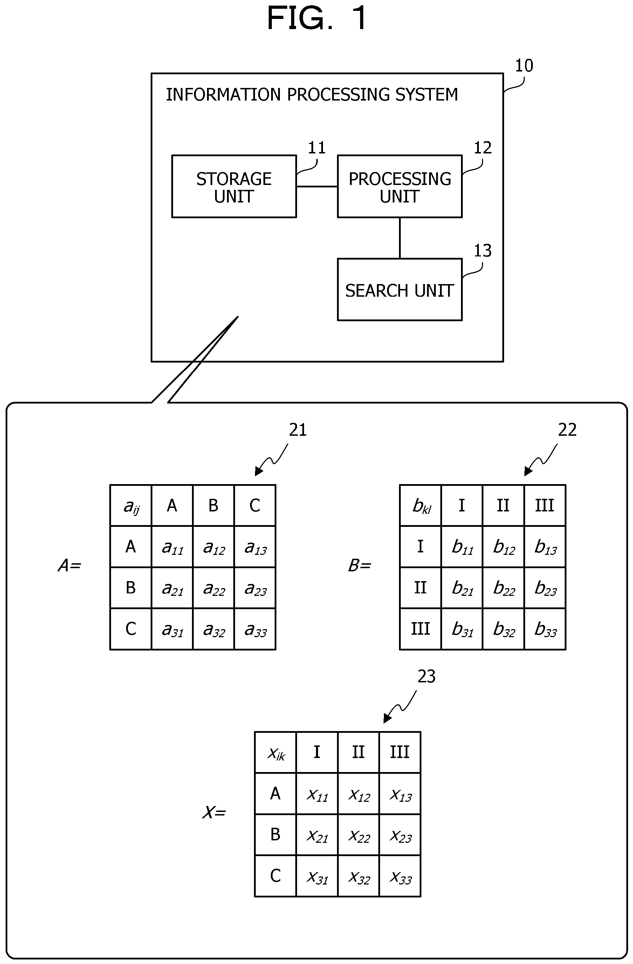

FIG. 1 is a diagram explaining an information processing system according to the first embodiment.
The information processing system 10 calculates a combinatorial optimization problem by replacing with an energy function of an Ising model. The energy function represents an energy value corresponding to a state of the Ising model, and is also called objective function, evaluation function, or the like. There is a QAP as a practical problem of the combinatorial optimization problem. In the QAP, a solution that minimizes a cost value represented by a product of two matrices under a constraint condition is obtained. The information processing system 10 solves the QAP based on the energy function of the Ising model.
The information processing system 10 includes a storage unit 11, a processing unit 12, and a search unit 13.
The storage unit 11 may be a volatile storage device such as a dynamic random access memory (DRAM) or may be a nonvolatile storage device such as a hard disk drive (HDD) or a flash memory. The storage unit 11 stores various data used for processing by the processing unit 12.

The processing unit 12 may include a central processing unit (CPU), a digital signal processor (DSP), an application specific integrated circuit (ASIC), a field programmable gate array (FPGA), and the like. The processing unit 12 may be a processor that executes a program. The "processor" here can include a set of a plurality of processors (multiprocessor). The processing unit 12 formulates the combinatorial optimization problem with the energy function based on input data of the combinatorial optimization problem, and outputs information of the energy function to the search unit 13. The processing unit 12 acquires a solution obtained by the search unit 13 and outputs the acquired solution to the outside. For example, the processing unit 12 may display the content of the solution on a display device connected to the information processing system 10 or may transmit the solution to another information processing device via a network.

The search unit 13 receives the information of the energy function from the processing unit 12, and searches for a ground state of the Ising model, that is, a solution that minimizes the value of the energy function on the basis of the energy function. The search unit 13 outputs the solution obtained by the search to the processing unit 12. The search unit 13 is implemented by dedicated hardware. For example, a search circuit implemented by using an integrated circuit such as an FPGA, an ASIC, or a graphics processing unit (GPU) may function as the search unit 13. However, the search unit 13 may be implemented by a processor executing a predetermined program. Examples of the search method used by the search unit 13 include an SA method, a replica exchange method, a simulated quantum annealing (SQA) method, and the like.

Here, consider a facility placement problem, which is one of examples of the QAP. In the facility placement problem, the cost value is calculated by a product of a flow matrix representing a flow between facilities and a distance matrix representing a distance between positions of placement candidates of facilities. Furthermore, a constraint condition that all facilities are placed at different positions from each other is imposed on the facility placement problem.

Therefore, the energy function obtained by formulating the combinatorial optimization problem can include a cost term representing the cost value and a constraint term representing the constraint condition. The state that minimizes the energy function is the ground state, which corresponds to the optimum solution of the appropriate problem. For example, an energy function H of the QAP is expressed by the equation (1).

[Equation 1]

$$H = \sum_{i=1}^{n}\sum_{j=1}^{n}\sum_{k=1}^{n}\sum_{l=1}^{n} a_{ij}b_{kl}x_{ik}x_{jl} \\ + \alpha \sum_{k=1}^{n}\left(1 - \sum_{i=1}^{n} x_{ik}\right)^{2} + \beta \sum_{i=1}^{n}\left(1 - \sum_{k=1}^{n} x_{ik}\right)^{2} \qquad (1)$$

The first term on the right side of the equation (1) is the cost term. The cost term is sometimes called objective term. The second and third terms on the right side of the equation (1) are the constraint terms, respectively. The constraint term is sometimes called penalty term. Note that, in a case of a problem that maximizes the energy function, the sign of the energy function is simply made opposite.

In the cost term of the equation (1), $a_{ij}$ represents a flow between objects to be placed such as facilities. i and j are indexes indicating the objects to be placed, respectively. $a_{ii} = 0$. Furthermore, $a_{ij} = a_{ji}$. $b_{kl}$ represents the distance between positions. k and l are indexes indicating the positions, respectively. $b_{kk} = 0$. Furthermore, $b_{kl} = b_{lk}$. $x_{ik}$ is a state variable indicating the presence or absence of placement of the object to be placed i at the position k. The state variable is a binary variable taking a value of 0 or 1, and is also called bit. The state of the Ising model is represented by a set of values of state variables. In a case where the object to be placed i is placed at the position k, $x_{ik} = 1$. In a case where the object to be placed i is not placed at the position k, $x_{ik} = 0$. n (n is an integer of 3 or more) is the number of objects to be placed and the number of positions.

As an example, consider a case where three objects to be placed A, B, and C and three positions I, II, and III are given. The index of the object to be placed A is 1, the index of the object to be placed B is 2, and the index of the object to be placed C is 3. The index of the position I is 1, the index of the position II is 2, and the index of the position III is 3. In this case, a matrix A = {$a_{ij}$} is expressed by a matrix 21. $a_{ij}$ corresponds to an element value of the i-th row and j-th column of the matrix 21. A matrix B = {$b_{kl}$} is expressed by a matrix 22. $b_{kl}$ corresponds to an element value of the k-th row and I-th column of the matrix 22. Moreover, X = {$x_{ik}$} is expressed by a matrix 23.

The constraint terms of the second and third terms on the right side of the equation (1) represent the constraint condition that all the objects to be placed are placed at different positions from one another. The constraint term of the second term on the right side represents the constraint that at each position, one object to be placed is placed. The constraint term of the third term on the right side represents the constraint that one object to be placed is placed at one position. $\alpha$ and $\beta$ are penalty coefficients. The penalty coefficient represents a positive value that is added for constraint violation, that is, a penalty value. $\alpha$ and $\beta$ are set to values larger than the value of the cost term in some degree.

In the search unit 13, for example, an energy function in which the energy function H of the equation (1) is expressed in a quadratic unconstrained binary optimization (QUBO) format is used. The information input by the processing unit 12 to the search unit 13 may be information of the energy function expressed in the QUBO format.

The search by the search unit 13 is executed as follows. As an example, consider a case of using the SA method or the replica exchange method.

The search unit 13 calculates, for each of the plurality of state variables, the amount of change in the value of the energy function due to a change in the value of one of the plurality of state variables, and probabilistically accepts the amount of change in a manner of giving a priority to a change in which the value of the energy function becomes small. However, with a steepest descent method, in a case where the process falls into a local solution, it is difficult to escape from the local solution. Therefore, the search unit 13 uses a metropolis method or a Gibbs method to determine a transition probability of the Ising model from one state to the next by changing a certain state variable. That is, the search unit 13 stochastically allows a change in which the value of the energy function becomes large according to a comparison between the amount of change in the value of the energy function and a noise value. The noise value is obtained based on a temperature value or a random number. The greater the temperature value, the greater an amplitude of the noise value. The greater the amplitude of the noise value, the easier a state transition with a great amount of increase in the value of the energy function is allowed.

The search unit 13 repeatedly tries the state transition based on such processing from the start of the search until a search end condition is satisfied, and obtains a set of values of a plurality of state variables when the search end condition is satisfied as a solution. For example, the search end condition is determined according to whether a predetermined unit time has elapsed, or whether the number of trials for the change in the state variable has reached a predetermined number of unit times, or the like.

The information processing system 10 makes the value range of the cost term adjustable in the formulation of the QAP. For example, specific description is as follows.

The processing unit 12 acquires a plurality of matrices each obtained by a product of each of a plurality of element values of a first matrix and a second matrix. The matrix 21 is an example of the first matrix. The matrix 22 is an example of the second matrix. For example, the processing unit 12 receives inputs of the first matrix and the second matrix and calculates the product of each of the plurality of element values of the first matrix and the second matrix to acquire the plurality of matrices. Alternatively, the processing unit 12 may acquire the plurality of matrices by receiving, from the outside, an input of a calculation result of the product of each of the plurality of element values of the first matrix and the second matrix.

The processing unit 12 performs correction to add or subtract a first value to or from at least one of a first group of element values corresponding to a first element value of the first matrix or a second group of element values corresponding to a second element value of the second matrix of the acquired plurality of matrices.

The processing unit 12 outputs the information of the energy function obtained by formulating the QAP on the basis of the plurality of matrices after correction to the search unit 13.

The search unit 13 searches for the ground state of the Ising model on the basis of the output information of the energy function.

Next, an example of the above correction by the processing unit 12 for the matrices 21 and 22 will be described.

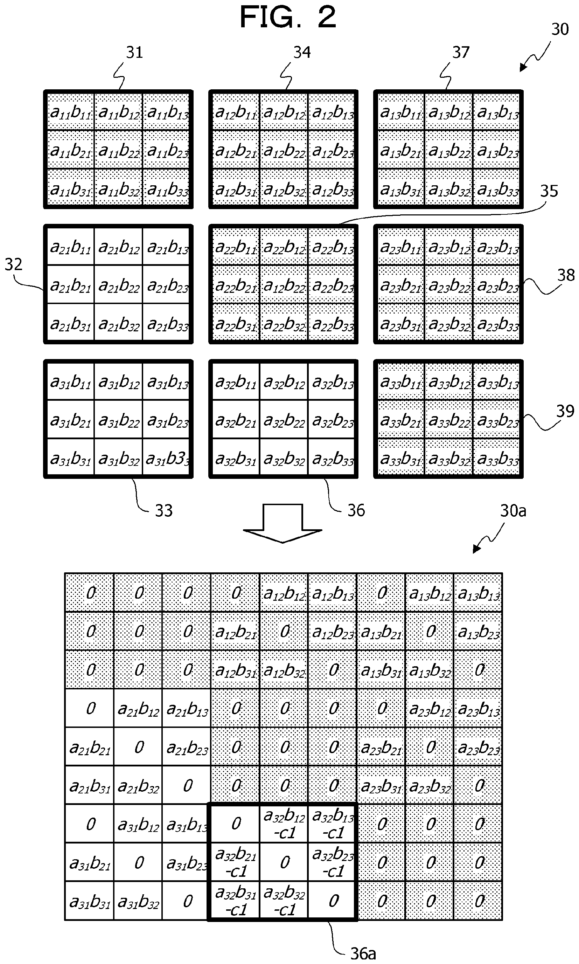

FIG. 2 is a diagram illustrating a first correction example.

The processing unit 12 acquires a matrix group 30 for the matrices 21 and 22. The matrix group 30 includes matrices 31, 32, 33, 34, 35, 36, 37, 38, and 39.

The matrix 31 is a product of an element value $a_{11}$ of the matrix 21 and the matrix 22.

The matrix 32 is a product of an element value $a_{21}$ of the matrix 21 and the matrix 22.

The matrix 33 is a product of an element value $a_{31}$ of the matrix 21 and the matrix 22.

The matrix 34 is a product of an element value $a_{12}$ of the matrix 21 and the matrix 22.

The matrix 35 is a product of an element value $a_{22}$ of the matrix 21 and the matrix 22.

The matrix 36 is a product of an element value $a_{32}$ of the matrix 21 and the matrix 22.

The matrix 37 is a product of an element value $a_{13}$ of the matrix 21 and the matrix 22.

The matrix 38 is a product of an element value $a_{23}$ of the matrix 21 and the matrix 22.

The matrix 39 is a product of an element value $a_{33}$ of the matrix 21 and the matrix 22.

The matrices 31 to 39 are or the matrix group 30 is an example of the plurality of matrices each obtained by the product of each of the plurality of element values of the first matrix and the second matrix.

The first correction example is an example of correction to add or subtract the first value to or from the first group of element values corresponding to the first element value of the first matrix, of the plurality of matrices each obtained by the product of each of the plurality of element values of the first matrix and the second matrix. The first value is, for example, a positive value.

The first matrix and the second matrix are symmetric matrices symmetric with respect to diagonal elements. Therefore, for example, the element values at the same position in the matrices 32 and 34 are the same. The element values at the same position in the matrices 33 and 37 are the same. The element values at the same position in the matrices 36 and 38 are the same. Therefore, considering correction of the matrices 32, 33, and 36 in the matrix group 30, the same values after correction of the corresponding matrices 32, 33, and 36 can be used for the matrices 34, 38, and 39. Therefore, the following description will mainly focus on the matrices 32, 33, and 36. Note that, since $a_{ii} = 0$ and $b_{kk} = 0$, the element value including $a_{ii}$ or $b_{kk}$ as a factor is 0. In the drawing, 0 may be written for the element value that is obviously 0.

For example, the processing unit 12 performs correction to subtract a value c1 from the group of element values corresponding to the element value $a_{32}$ of the matrix 21, that is, the matrix 36, of the matrix group 30. The processing unit 12 generates a matrix 36a by subtracting the value c1 from each of the element values of the matrix 36. Note that the value c1 does not have to be subtracted from element values (for example, $a_{32}b_{11}$, $a_{32}b_{22}$, and $a_{32}b_{33}$) of the diagonal elements corresponding to the state of constraint violation.

A matrix group 30a is obtained by correcting the matrix 36 of the matrix group 30 to a matrix 36a. In this case, the element value $a_{32}$ is an example of the first element value. Furthermore, the matrix 36 is an example of the first group. Furthermore, the value c1 is an example of the first value.

There are several possible methods of determining the magnitude of the first element value and the value c1 and whether to subtract or add the value c1. For example, the processing unit 12 determines the magnitude of the first element value and the value c1 and whether to subtract or add the value c1 such that the value range of the cost term becomes small. Note that it is not necessary to consider the diagonal elements of the first group in determining the magnitude of the value c1. That is, it may be considered that the diagonal elements are excluded from the first group or that the diagonal elements are not included in the first group.

Specifically, the processing unit 12 may preferentially set a large value among the element values of the matrix 21 as the first element value, and subtract the value c1 from the first group corresponding to the first element value of the matrix group 30. At this time, the processing unit 12 may determine the magnitude of the value c1 based on a difference between the first element value and another element value in the matrix 21, or may determine the magnitude of the value c1 such that a minimum value of the element values of the matrix 36a becomes a predetermined value (for example, 0).

Alternatively, the processing unit 12 may preferentially sets a small value among the element values of the matrix 21 as the first element value, and add the value c1 to the first group corresponding to the first element value of the matrix group 30. At this time, the processing unit 12 may determine the magnitude of the value c1 based on the difference between the first element value and another element value of the matrix 21.

Moreover, the processing unit 12 may determine a plurality of first element values from the matrix 21. That is, a plurality of first groups may be adopted. In the example of FIG. 2, the processing unit 12 may further correct at least one of the matrix 32 or 33, in addition to the matrix 36. In this case, the processing unit 12 may determine the magnitude of the correction value to be applied to the matrices 32, 33, and 36 and whether to add or subtract the correction value such that a difference among reference values in the element values included in the matrices 32, 33, and 36 becomes small. Examples of the type of the reference value include a minimum value, an average value, a percentile value of the element values in the appropriate matrix, and the like. The reference value may be determined without including the diagonal elements of the appropriate matrix. For example, as a correction method of making the difference among the reference values in the element values included in the matrices 32, 33, and 36 small, a method of performing correction such that the minimum value of each matrix becomes a predetermined value (for example, 0), or a method of performing correction such that a difference in the average value of the element values of each matrix becomes small is conceivable.

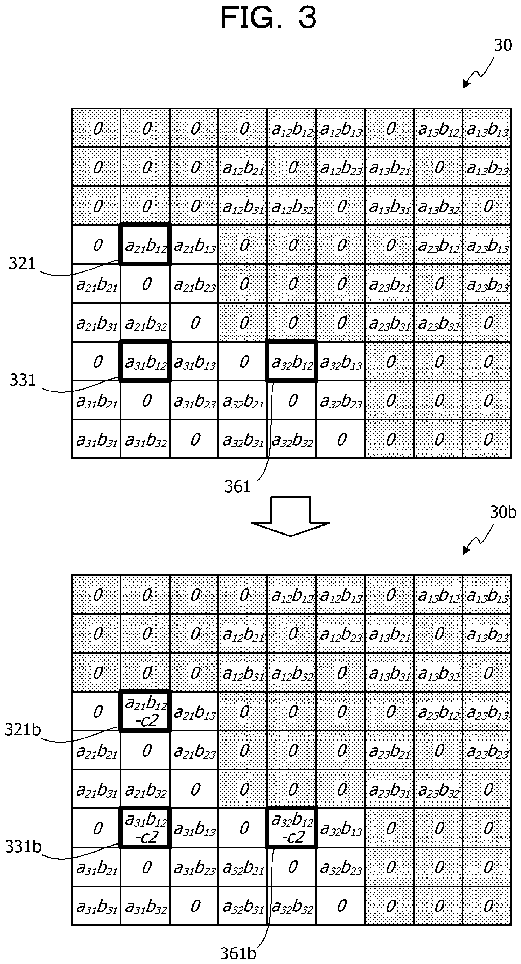

FIG. 3 is a diagram illustrating a second correction example.

The second correction example is an example of correction to add or subtract the first value to or from the second group of element values corresponding to the second element value of the second matrix, of the plurality of matrices each obtained by the product of each of the plurality of element values of the first matrix and the second matrix.

For example, the processing unit 12 performs correction to subtract a value c2 from the group of element values corresponding to the element value $b_{12}$ of the matrix 22, that is, the group of the element values 321, 331, and 361, among the matrix group 30. The processing unit 12 generates a matrix group 30b by subtracting the value c2 from the element values 321, 331, and 361 of the matrix group 30.

The matrix group 30b includes element values 321b, 331b, and 361b. The element value 321b is a value obtained by subtracting the value c2 from the element value 321. The element value 331b is a value obtained by subtracting the value c2 from the element value 331. The element value 361b is a value obtained by subtracting the value c2 from the element value 361.

In this case, the element value $b_{12}$ is an example of the second element value. Furthermore, the group of the element values 321, 331, and 361 is an example of the second group. Furthermore, the value c2 is an example of the first value.

There are several possible methods of determining the magnitude of the second element value and the value c2 and whether to subtract or add the value c2. For example, the processing unit 12 determines the magnitude of the second element value and the value c2 and whether to subtract or add the value c2 such that the value range of the cost term becomes small.

Specifically, the processing unit 12 may preferentially set a large value among the element values of the matrix 22 as the second element value, and subtract the value c2 from the second group corresponding to the second element value of the matrix group 30. At this time, the processing unit 12 may determine the magnitude of the value c2 on the basis of a difference between the second element value and another element value in the matrix 22, or may determine the magnitude of the value c2 such that a minimum value of the element values 321, 331, and 361 becomes a predetermined value (for example, 0).

Alternatively, the processing unit 12 may preferentially set a small value among the element values of the matrix 22 as the second element value, and add the value c2 to the second group corresponding to the second element value of the matrix group 30. At this time, the processing unit 12 may determine the magnitude of the value c2 on the basis of the difference between the second element value and another element value of the matrix 22.

Moreover, the processing unit 12 may determine a plurality of second element values from the matrix 22. That is, a plurality of second groups may be adopted. In the example of FIG. 3, the processing unit 12 may further correct a group corresponding to another element value of the matrix 22, in addition to the group corresponding to the element value $b_{12}$. In this case, the processing unit 12 may determine the magnitude of the correction value to be applied to each group and whether to add or subtract the correction value such that the difference in the reference value in the element values included in each group becomes small. Examples of the type of the reference value include a minimum value, an average value, a percentile value of the element values in the appropriate group, and the like. For example, as a correction method of making the difference in the reference value in the element values included in each group small, a method of performing correction such that the minimum value belonging to each group becomes a predetermined value (for example, 0), or a method of performing correction such that the difference in the average value of the element values belonging to each group small is conceivable.

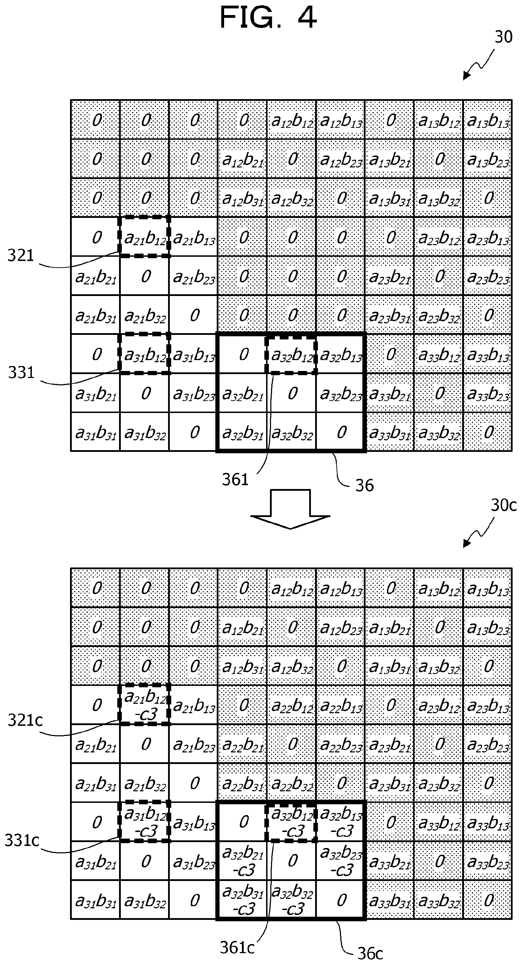

FIG. 4 is a diagram illustrating a third correction example.

The third correction example is an example of adding or subtracting the first value to or from both the first group of element values corresponding to the first element value of the first matrix and the second group of element values corresponding to the second element value of the second matrix, of the plurality of matrices each obtained by the product of each of the element values of the first matrix and the second matrix.

For example, the processing unit 12 performs correction to subtract a value c3 from both the first group of element values corresponding to the element value $a_{32}$ of the matrix 21 and the second group of element values corresponding to the element value $b_{12}$ of the matrix 22, of the matrix group 30. In this case, the first group corresponds to the matrix 36. Furthermore, the second group corresponds to the group of the element values 321, 331, and 361. That is, the processing unit 12 generates a matrix 36c by subtracting the value c3 from each of the element values of the matrix 36. Furthermore, the processing unit 12 generates element values 321c and 331c by subtracting the value c3 from the element values 321 and 331. Note that the value c3 does not have to be subtracted from element values (for example, $a_{32}b_{11}$, $a_{32}b_{22}$, and $a_{32}b_{33}$) corresponding to the state of constraint violation.

The matrix group 30c is obtained by correcting the matrix 36 of the matrix group 30 to the matrix 36c and correcting the element values 321 and 331 to the element values 321c and 331c. The matrix 36c includes an element value 361c obtained by subtracting the value c3 from the element value 361.

There are several possible methods of determining the magnitude of the first element value, the second element value, and the value c3 and whether to subtract or add the value c3. For example, the processing unit 12 determines the magnitude of the first element value, the second element value, and the value c3 and whether to subtract or add the value c3 such that the value range of the cost term becomes small. Note that it is not necessary to consider the diagonal elements of the first group in determining the magnitude of the value c3. That is, it may be considered that the diagonal elements are excluded from the first group or that the diagonal elements are not included in the first group.

Specifically, the processing unit 12 may preferentially set larger values among the element values of the matrices 21 and 22 as the first element value and the second element value, and subtract the value c3 from the first group corresponding to the first element value and from the second group corresponding to the second element value, of the matrix group 30. At this time, the processing unit 12 may determine the magnitude of the value c3 on the basis of a difference in magnitude between the first element value and another element value of the matrix 21 or a difference between the second element value and another element value of the matrix 22. Alternatively, the processing unit 12 may determine the magnitude of the value c3 such that the minimum values of the element values belonging to the first group and the second group to a predetermined value (for example, 0).

Alternatively, the processing unit 12 may preferentially set small values among the element values of the matrices 21 and 22 as the first element value and the second element value, and add the value c3 to the first group corresponding to the first element value and to the second group corresponding to the second element value, of the matrix group 30. At this time, the processing unit 12 may determine the magnitude of the value c3 based on a difference in magnitude between the first element value and another element value of the matrix 21 or a difference between the second element value and another element value of the matrix 22.

Moreover, the processing unit 12 may determine a plurality of first element values from the matrix 21 and a plurality of second element values from the matrix 22. That is, a plurality of first groups and a plurality of second groups may be respectively adopted. For example, the processing unit 12 may further perform correction to subtract the value c3 from at least one of the matrices 32 or 33, in addition to the matrix 36. In this case, the processing unit 12 may determine the magnitude of the correction value to be applied and whether to add or subtract the correction value such that the difference in the reference value in the element values included in each group becomes small. For example, as a correction method of making the difference in the reference value in the element values included in each group small, a method of performing correction such that the minimum value of each group becomes a predetermined value (for example, 0), or a method of performing correction such that the difference in the average value of the element values of each group small is conceivable.

The processing unit 12 generates information of the energy function on the basis of any of the matrix groups 30a, 30b, and 30c obtained by the correction illustrated in FIGS. 2 to 4, and outputs the information to the search unit 13.

According to the information processing system 10, a plurality of matrices obtained by the product of each of the plurality of element values of the first matrix and the second matrix is acquired. The correction to add or subtract the first value to or from at least one of the first group of element values corresponding to the first element value of the first matrix or the second group of element values corresponding to the second element value of the second matrix is performed for the plurality of matrices. The information of the energy function obtained by formulating the QAP on the basis of the plurality of matrices after correction is output. The ground state of the Ising model is searched on the basis of the output information of the energy function.

Therefore, the cost value can be appropriately adjusted.

Here, when correcting parameters included in the energy function, an influence on the optimum solution becomes a problem. This is because there is a possibility that the optimum solution changes.

Meanwhile, the element value is not duplicately used from the above first group and the second group in the calculation of the cost value for the optimum solution. Therefore, even if the correction to add or subtract the first value to or from at least one of the first group or the second group is performed, the optimum solution for the energy function in a case of not performing correction becomes the optimum solution that gives the minimum value to the energy function in a case of performing the correction. Therefore, the processing unit 12 can adjust the value range of the cost term in the energy function without changing the optimum solution both in the case of not performing correction and in the case of performing correction by performing the correction illustrated in FIGS. 2 to 4.

For example, the processing unit 12 can make the value range of the cost term by correction small, and can make the relative difference between the penalty coefficients $\alpha$ and $\beta$ and each cost value in the equation (1) small. Then, transition to another state across the energy barrier based on the penalty coefficient becomes easy even from a state where the value of the energy function is relatively small, and the reachability to the optimum solution can be enhanced.

For example, the processing unit 12 may cause the search unit 13 to search for a solution, staring the penalty coefficients $\alpha$ and $\beta$ with small values, and cause the search unit 13 to search for a solution again with large values a and $\beta$ in a case where the solution output from the search unit 13 does not satisfy the constraint condition. When the solution output from the search unit 13 satisfies the constraint condition, the processing unit 12 adopts the solution as the final solution. By controlling the penalty coefficients $\alpha$ and $\beta$ to be increased in stages from relatively small values in this way, transition from one state to another state across the energy barrier based on $\alpha$ and $\beta$ is facilitated, and the solution that satisfies the constraint condition can be efficiently searched.

Here, the correction methods illustrated in FIGS. 2 to 4 can be selected according to the tendency of the element values included in each of the matrices 31 to 39.

For example, when a relatively large value is included in a matrix of the matrices 32, 33, and 36, and an index (for example, variance) representing the range of distribution of the element values in the matrix is smaller than a threshold value, it is conceivable that the processing unit 12 applies the first correction example, narrowing the matrices 32, 33, and 36 to the matrix.

Alternatively, when a relatively large value is included in a matrix of the matrices 32, 33, and 36, and the index (for example, variance) representing the range of distribution of the element values in the matrix is equal to or larger than a threshold value, there is a possibility that smoothing of the value range of the cost term becomes insufficient only by the first correction example. In such a case, it is conceivable that the processing unit 12 applies the second correction example in place of or in combination with the first correction example. Note that the processing unit 12 may use standard deviation or the magnitude of the range of the element values in an appropriate matrix, that is, for example, the difference between the maximum value and the minimum value, as the index representing the range of the element values in an appropriate group.

As a result, an appropriate correction method according to the tendency of the element values in the matrices 31 to 39 can be used.

Note that the processing unit 12 may execute the correction by the first correction example illustrated in FIG. 2 before acquiring the matrix group 30. Specifically, in the example of FIG. 2, it is conceivable to obtain the matrix 36a without acquiring the matrix 36 by performing the correction to add or subtract a predetermined value to or from the element value $b_{12}$ of the matrix 22 before obtaining the matrix 36.

That is, regarding the product of the first element value of the first matrix and the second matrix, the processing unit 12 may perform the correction to add or subtract the first value to or from the second element value of the second matrix, and output information of the energy function obtained by formulating the QAP based on the product after correction.

More specifically, regarding the product of the first element value of the plurality of elements included in the first matrix and the second matrix, the processing unit 12 may calculate the product of the first element value and the second matrix after performing the correction to add or subtract the first value to or from each of the plurality of second element values of the second matrix. Even by such a method, the cost value can be adjusted without changing the optimum solution.

[Second Embodiment]

Next, a second embodiment will be described.

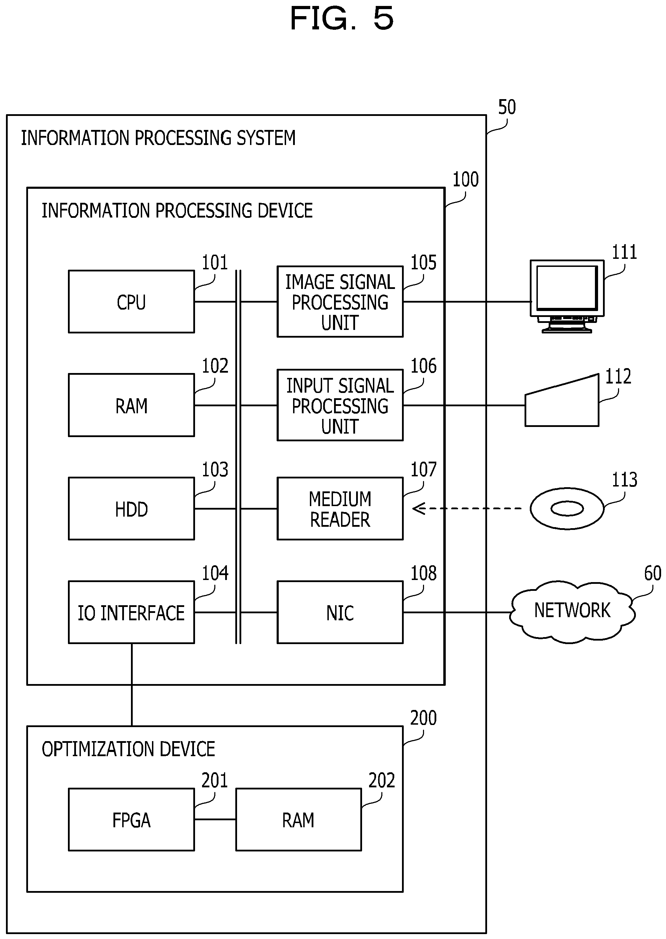

FIG. 5 is a diagram illustrating a hardware example of an information processing system according to the second embodiment.

An information processing system 50 includes an information processing device 100 and an optimization device 200.

The information processing device 100 generates information of an energy function corresponding to a combinatorial optimization problem by formulating the combinatorial optimization problem, and inputs the generated information of the energy function to the optimization device 200. In the second embodiment, a QAP is considered as an example of the combinatorial optimization problem. The QAP is a model of a facility placement problem. The facility placement problem has, for example, various applications such as a hospital facility placement problem, an airport gate assignment problem, a Steinberg wiring problem, and a keyboard layout problem. The information of the energy function input to the optimization device 200 indicates the energy function in which the energy function H in the equation (1) is expressed in a QUBO format. The energy function in the QUBO format reflects the cost term and the constraint term in the equation (1).

The information processing device 100 includes a CPU 101, a RAM 102, an HDD 103, an input/output (IO) interface 104, an image signal processing unit 105, an input signal processing unit 106, a medium reader 107, and a network interface card (NIC) 108. The CPU 101 is an example of the processing unit 12 according to the first embodiment. The RAM 102 is an example of the storage unit 11 according to the first embodiment.

The CPU 101 is a processor that executes a program command. The CPU 101 loads at least a part of the program and data stored in the HDD 103 into the RAM 102, and executes the program. Note that the CPU 101 may include a plurality of processor cores. Furthermore, the information processing device 100 may include a plurality of processors. A set of a plurality of processors is sometimes referred to as a "multiprocessor" or simply a "processor".

The RAM 102 is a volatile semiconductor memory that temporarily stores the program executed by the CPU 101 and data used by the CPU 101 for operations. The RAM 102 may be, for example, a dynamic RAM (DRAM). Note that the information processing device 100 may include a memory of a type different from the RAM 102, or a plurality of memories.

The HDD 103 is a nonvolatile storage device that stores programs of software such as an operating system (OS), middleware, and application software, and data. Note that the information processing device 100 may include other types of storage devices such as a flash memory and a solid state drive (SSD), and may include a plurality of nonvolatile storage devices.

The IO interface 104 is connected to the optimization device 200, and inputs/outputs data to/from the optimization device 200 according to an instruction from the CPU 101. For example, the IO interface 104 writes data of the RAM 102 to a register or a memory of the optimization device 200 or reads data from the optimization device 200 and writes the data to the RAM 102 in response to the instruction of the CPU 101. A peripheral component interconnect - express (PCI-e) is used for the IO interface 104, for example.

The image signal processing unit 105 outputs an image to a display 111 connected to the information processing device 100 according to an instruction from the CPU 101. As the display 111, any type of display such as a cathode ray tube (CRT) display, a liquid crystal display (LCD), a plasma display, or an organic electro-luminescence (OEL) display may be used.

The input signal processing unit 106 acquires an input signal from an input device 112 connected to the information processing device 100, and outputs the input signal to the CPU 101. As the input device 112, a pointing device such as a mouse, a touch panel, a touch pad, or a trackball, a keyboard, a remote controller, a button switch, or the like may be used. Furthermore, a plurality of types of input devices may be connected to the information processing device 100.

The medium reader 107 is a reading device that reads the program and data recorded on a recording medium 113. As the recording medium 113, for example, a magnetic disk, an optical disk, a magneto-optical (MO) disk, a semiconductor memory, or the like can be used. Examples of the magnetic disk include a flexible disk (FD) and an HDD. The optical disc includes a compact disc (CD) and a digital versatile disc (DVD).

The medium reader 107 copies, for example, the program and data read from the recording medium 113 to another recording medium such as the RAM 102 or the HDD 103. The read program is executed by the CPU 101, for example. Note that the recording medium 113 may be a portable recording medium, and may be used for distribution of the program and data. Furthermore, the recording medium 113 and the HDD 103 may be sometimes referred to as computer-readable recording media.

The NIC 108 is an interface that is connected to a network 60 and communicates with other computers via a network 60. The NIC 108 is connected to a communication device such as a switch or a router by a cable, for example.

The optimization device 200 is an accelerator that performs ground state search by, for example, an SA method, a replica exchange method, or an MCMC method by hardware based on the information of the energy function. The optimization device 200 may be called Ising machine, Boltzmann machine, or the like. The optimization device 200 includes an FPGA 201 and a RAM 202. The FPGA 201 implements a solution search function for the problem expressed by the Ising model. The solution search function by the optimization device 200 may be implemented by other types of integrated circuits such as ASIC and GPU. The RAM 202 is a memory that stores various data used for the solution search of the FPGA 201. The RAM 202 is, for example, a static RAM (SRAM).

Note that the optimization device 200 may be hardware that performs the ground state search by a quantum annealing method. Furthermore, the CPU 101 included in the information processing device 100 or another processor can implement a function of a search unit that uses, for example, the SA method, replica exchange method, or SQA method by executing predetermined software, instead of the optimization device 200.

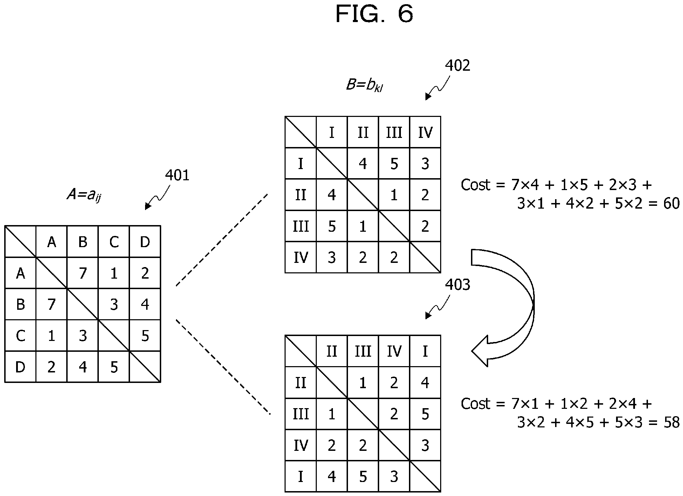

FIG. 6 is a diagram illustrating a calculation example of cost of a quadratic assignment problem.

Here, consider a facility placement problem of placing four facilities (A to D) at four positions (I to IV).

A matrix 401 is a flow matrix A = {$a_{ij}$} representing a flow between facilities. Matrices 402 and 403 are distance matrices B = {$b_{kl}$} representing a distance between positions. The matrix 403 is obtained by performing a matrix replacement operation for the matrix 402. Diagonal elements of the matrices 401, 402, and 403 are 0, respectively. Illustration of 0 is omitted and diagonal lines are illustrated.

For example, the combination of the matrices 401 and 402 can represent that the facility A is placed at the position I, the facility B is placed at the position II, the facility C is placed at the position III, and the facility D is placed at the position IV. The cost in this case is $7 \times 4 + 1 \times 5 + 2 \times 3 + 3 \times 1 + 4 \times 2 + 5 \times 2 = 60$.

Furthermore, the combination of the matrices 401 and 403 can represent that the facility A is placed at the position II, the facility B is placed at the position III, the facility C is placed at the position IV, and the facility D is placed at the position I. The cost in this case is $7 \times 1 + 1 \times 2 + 2 \times 4 + 3 \times 2 + 4 \times 5 + 5 \times 3 = 58$.

In this way, it is conceivable to calculate the cost while changing the correspondence between the facility and the placement destination position by the replacement operation of the matrices, and specify an assignment method that minimizes the cost. However, as the number of facilities and positions increases, the number of combinations becomes enormous, and it becomes impossible to obtain a solution in a practical time by solving by such a method. Therefore, the optimization device 200 is used.

The optimization device 200 solves the problem obtained by converting the QAP into the Ising model.

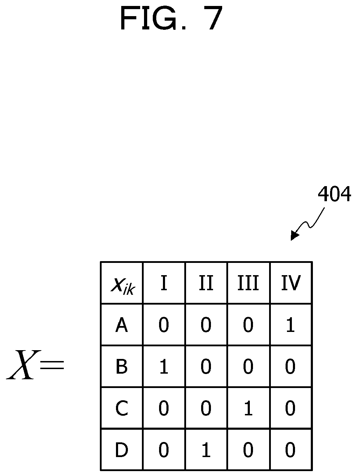

FIG. 7 is a diagram illustrating an expression example of assignment by an Ising model.

A matrix 404 is a matrix X = {$x_{ik}$} representing the state of the Ising model. $x_{ik}$ is a state variable in the equation (1). In a case where a facility i is placed at a position k, $x_{ik}$ = 1. In a case where the facility i is not placed at the position k, $x_{ik}$ = 0. The value of $x_{ik}$ may be expressed as in the equation (2).

(Equation 2)

$$x_{ik} = \begin{cases} 1, & if\ \phi(i) = k \\ 0, & otherwise \end{cases} \tag{2}$$

$\varphi(i)$ is a function indicating, in a case where the position to place each facility is expressed by a permutation of an index i of the facility, the position of the facility i in the permutation. $\varphi(i) = k$ means that the facility i is placed at the position k.

For example, the matrix 404 represents that the facility A is placed at the position IV, the facility B is placed at the position I, the facility C is placed at the position III, and the facility D is placed at the position II.

In the QAP, constraint conditions that "at one position, one facility is placed" and "one facility is placed at one position". These constraint conditions correspond to "only one bit exists in one column" and "only one bit exists in one row" in the matrix 404, respectively.

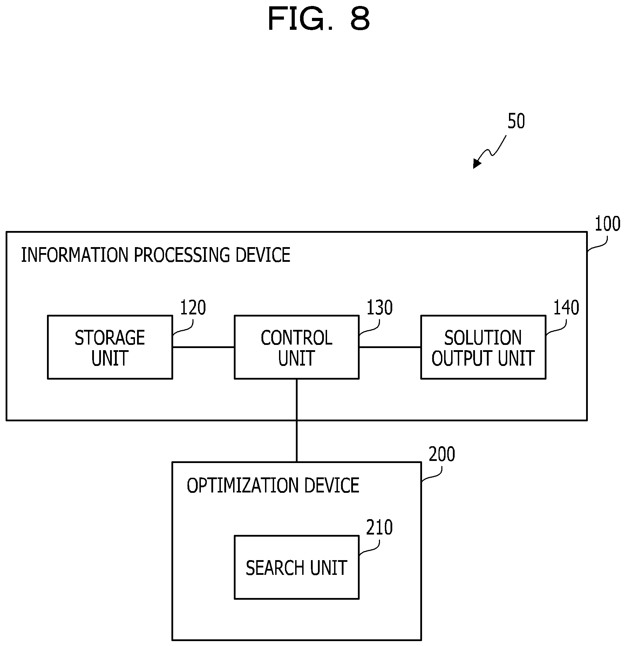

Fig. 8 is a diagram illustrating a functional example of the information processing system.

The information processing device 100 includes a storage unit 120, a control unit 130, and a solution output unit 140. A storage area of the RAM 102 or the HDD 103 is used as the storage unit 120. The control unit 130 and the solution output unit 140 are implemented by the CPU 101 executing a program stored in the RAM 102.

Furthermore, the optimization device 200 has a search unit 210. The search unit 210 is implemented by the FPGA 201.

The storage unit 120 stores various data used for formulating the QAP by the control unit 130. For example, the storage unit 120 stores information of a flow matrix and a distance matrix in the QAP, and a matrix group obtained by a product of each element value of the flow matrix and the distance matrix.

The control unit 130 receives an input of the QAP data and formulates the QAP based on the data. In the formulation, the value of $a_{ij}b_{kl}$ in the equation (1) and the values of $\alpha$ and $\beta$ are determined. The control unit 130 generates information of the energy function expressing the equation (1) in the QUBO format. The control unit 130 outputs the generated information of the energy function to the optimization device 200, and causes the optimization device 200 to search for a solution based on the energy function.

The control unit 130 acquires the solution obtained by the search of the optimization device 200 and outputs the acquired solution to the solution output unit 140 when the acquired solution satisfies the constraint and outputs the final solution. When the acquired solution does not satisfy the constraint, the control unit 130 redetermines values of $\alpha$ and $\beta$, regenerates the energy function, and causes the optimization device 200 to execute the search again by the energy function.

The solution output unit 140 acquires the solution obtained by the search of the optimization device 200, and outputs the acquired solution. For example, the solution output unit 140 may convert the solution obtained from the optimization device 200 into a solution format for the QAP and display the solution on the display 111, or may transmit information of the solution to another computer via the network 60.

The search unit 210 acquires the information of the energy function output by the control unit 130, and searches for a ground state of the Ising model, that is, an optimum solution, based on the energy function. The search unit 210 outputs the solution obtained by the search to the information processing device 100.

Here, the energy function of the QAP includes a constraint term representing constraint conditions as described above. For example, the constraint conditions are "at one position, one facility is placed" and "one facility is placed at one position" in the above-described facility placement problem. Therefore, the search in the search unit 210 is affected by the constraint term.

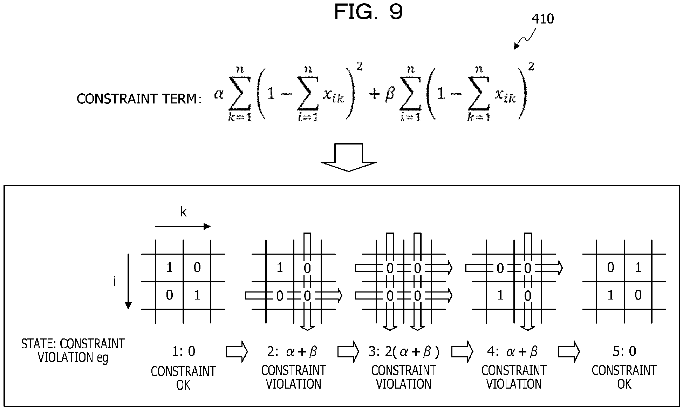

FIG. 9 is a diagram illustrating an example of state transition in a case where an energy function includes a constraint term.

A constraint term 410 is the constraint term of the equation (1). FIG. 9 illustrates four state variables, and illustrates a constraint violation energy value (constraint violation eg) corresponding to each state in a form of "state: constraint violation eg" along with a process of state transition in the search. The constraint violation eg is a penalty value associated with the constraint violation that is added to the cost term and is calculated on the basis of the constraint term 410. Furthermore, in FIG. 9, it is assumed that a certain state is represented by a number indicating the state.

For example, the state "1" is $\{x_{ik}\} = (x_{11}, x_{12}, x_{21}, x_{22}) = (1, 0, 0, 1)$. The state "1" does not violate the constraint condition, that is, a state of constraint OK. Therefore, the constraint violation eg corresponding to the state "1" is "0".

The state "2" is a state in which the state transition has progressed once from the state "1". The state "2" is $\{x_{ik}\} = (x_{11}, x_{12}, x_{21}, x_{22}) = (1, 0, 0, 0)$. The state "2" violates the constraint condition. The constraint violation eg corresponding to the state "2" is "$\alpha + \beta$".

The state "3" is a state in which the state transition has progressed once from the state "2". The state "3" is $\{x_{ik}\} = (x_{11}, x_{12}, x_{21}, x_{22}) = (0, 0, 0, 0)$. The state "3" violates the constraint condition. The constraint violation eg corresponding to the state "3" is "$2(\alpha + \beta)$".

The state "4" is a state in which the state transition has progressed once from the state "3". The state "4" is $\{x_{ik}\} = (x_{11}, x_{12}, x_{21}, x_{22}) = (0, 0, 1, 0)$. The state "4" violates the constraint condition. The constraint violation eg corresponding to the state "4" is "$\alpha + \beta$".

The state "5" is a state in which the state transition has progressed once from the state "4". The state "5" is $\{x_{ik}\} = (x_{11}, x_{12}, x_{21}, x_{22}) = (0, 1, 1, 0)$. The state "5" does not violate the constraint condition, that is, a state of the constraint OK. Therefore, the constraint violation eg corresponding to the state "5" is "0".

In this way, it may not be possible to reach another state that satisfies the constraint from one state that satisfies the constraint without going through a state that violates the constraint. In the state that violates the constraint, the energy value becomes large due to the penalty value. The state with a large energy value can be a so-called energy barrier that stagnates the state transition.

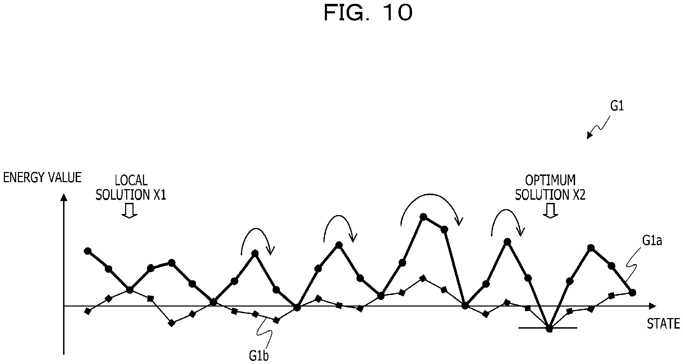

FIG. 10 is graphs illustrating examples of the energy barrier in the search.

A graph G1 illustrates the energy value for the state of the Ising model. In the graph G1, the state of the Ising model is expressed in one dimension for convenience. The horizontal axis of the graph G1 represents the state of the Ising model. The vertical axis of the graph G1 represents the energy value. A series G1a of the graph G1 is a series illustrating a relationship between the state and the energy value in a case of including the constraint term for a certain problem. A series G1b is a series illustrating a relationship between the state and the energy value in a case of not including the constraint term for the certain problem.

Furthermore, in the graph G1, a local solution X1 and an optimum solution X2 are illustrated for the series G1a. The local solution X1 is a locally optimum solution in which the energy value has a minimum value. The optimum solution X2 is a globally optimum solution.

In the series G1a, an arrow indicates a state of overcoming a relatively large energy value. Such a relatively large energy value is the energy value in the state that violates the constraint. According to the series G1a, for example, to reach the optimum solution X2 from the local solution X1, it is necessary to overcome many energy barriers due to the constraint term.

At this time, when the energy barrier becomes high due to numerical value data of the problem, a state transition for overcoming the energy barrier becomes difficult and reaching the optimum solution becomes difficult.

Therefore, the information processing device 100 relaxes restriction of the state transition due to the energy barrier and provides a function to enable an efficient search. The information processing device 100 adjusts the cost value calculated by the flow matrix and the distance matrix.

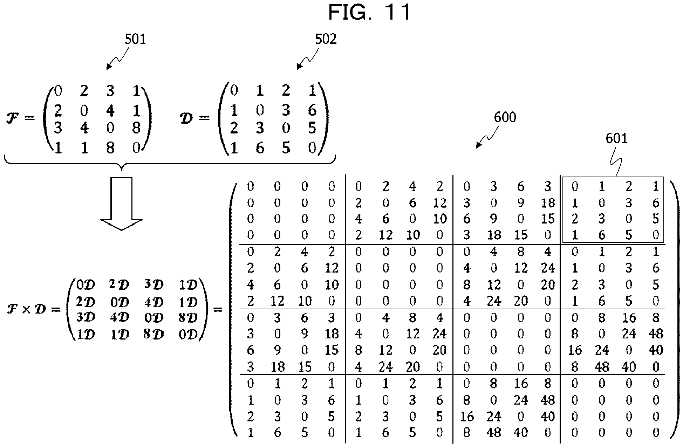

FIG. 11 is a diagram illustrating an expansion example by the product of the flow matrix and the distance matrix.

A matrix 501 represented by F is the flow matrix. A matrix 502 represented by D is the distance matrix. A submatrix group 600 is a set of submatrices represented by $F \times D$. Here, the operation of "x" in $F \times D$ indicates calculation of the product of each element value of the flow matrix and the distance matrix. The submatrix group 600 may be considered as one matrix. In the example of FIG. 11, the matrix 501 has four rows and four columns. In this case, $F \times D$ is a set of $n \times n = 4 \times 4 = 16$ submatrices. For example, the submatrix 601 is the product of the element value "1" in the 1st row and 4th column of the matrix 501 and the matrix 502. The matrix 502 has four rows and four columns. Therefore, the submatrix has also four rows and four columns. Therefore, the submatrix group 600 contains $n^2 \times n^2 = 4^2 \times 4^2 = 256$ element values.

The position of a submatrix in the submatrix group 600 is expressed by (row, column) = (i, j) of the matrix 501. Furthermore, the position of an element value in the submatrix is expressed by (row, column) = (k, l) in the matrix 502.

The matrices 501 and 502 are symmetric matrices with zero diagonal elements. Therefore, in the submatrix group 600, all the element values of diagonally located submatrices are 0, and the respective submatrix is symmetric with respect to the diagonal. Furthermore, the submatrix is a symmetric matrix with 0 diagonal elements.

Here, consider the optimum solution of the QAP in which the flow matrix and the distance matrix are expressed by the matrices 501 and 502, respectively.

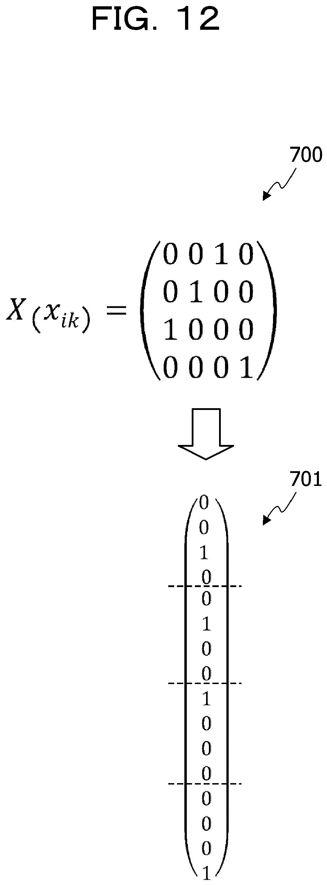

FIG. 12 is a diagram illustrating an example of expanding an optimum solution into a column vector.

A solution 700 is the optimum solution of the QAP in which the flow matrix and the distance matrix are expressed by the matrices 501 and 502, respectively. One element value of the solution 700 corresponds to the value of the state variable $x_{ik}$, that is, a bit. A column vector 701 is a vector obtained by expanding the solution 700 into a column. The elements of the column vector 701 are $x_{11}, x_{21}, x_{31}, x_{41}, x_{21}, x_{22}$, and the like in order from the top. Similarly, a row vector $(x_{11}, x_{21}, x_{31}, x_{41}, x_{21}, x_{22},...)$ obtained by expanding the solution 700 into a row can be obtained, and when the column vector 701 and the row vector are arranged in a column direction and a row direction according to the element values of the submatrix group 600, the QAP can be handled as follows.

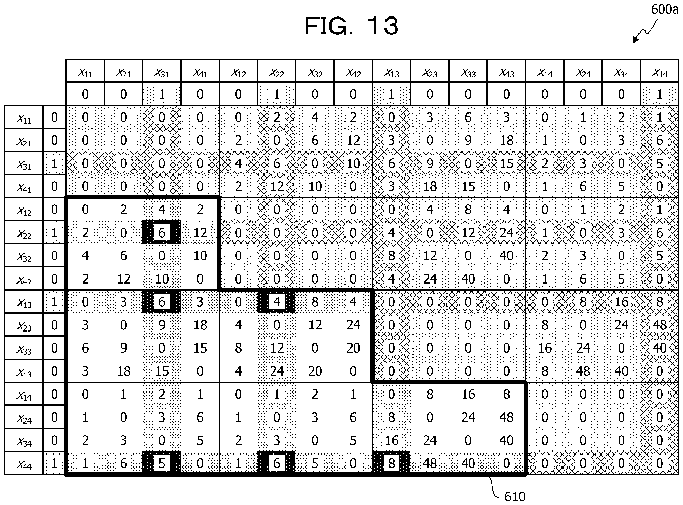

FIG. 13 is a diagram illustrating an example of element values selected in the optimum solution.

A submatrix group 600a is formed by arranging the column vector 701 and the row vector obtained by expanding the solution 700 in the row direction and the column direction of the submatrix group 600. As described above, the submatrix group 600 is symmetric with respect to the diagonal, and all the element values of the diagonally located submatrices are 0. Therefore, for the calculation of the cost value, a part 610 of the submatrix group 600a is simply considered.

In the case of calculating the cost value of the optimum solution, an element of the part 610 where a row and a column with the bit of 1 intersect is selected. Note that, due to the nature of the element value mapping in the submatrix group 600a, the diagonal elements in each submatrix correspond to the state that violates the constraint, and therefore are not selected in the optimum solution.

According to the submatrix group 600a, the energy value corresponding to the optimum solution is $2 \times (6 + 6 + 4 + 5 + 6 + 8) = 70$.

Here are two conditions for the obtained solution being an executable solution, that is, a solution that satisfies the constraint.

The first condition is that one element value is selected from each submatrix.

The second condition is that one element value located at the same position is selected from each of different submatrices.

Manipulating numerical value data for the submatrix group 600 based on the above first and second conditions without changing the optimum solution, that is, without changing ranking of the energy values of the optimum solution. For example, specific description is as follows.

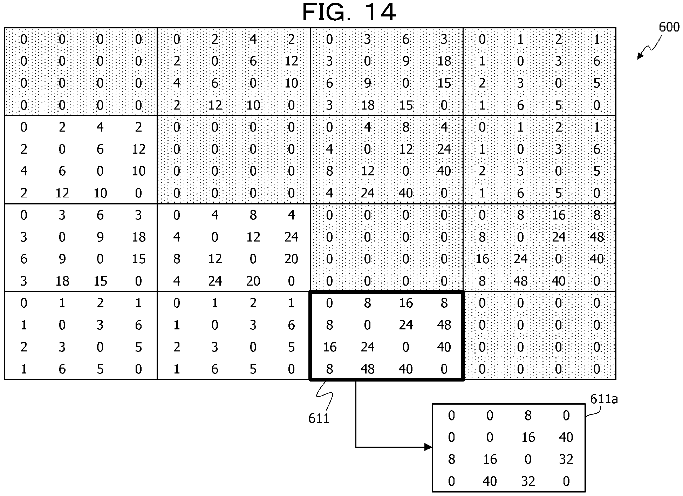

FIG. 14 is a diagram illustrating a correction example of element values (No. 1).

For example, the control unit 130 subtracts 8 from each element value of a submatrix 611 of the submatrix group 600. A submatrix 611a represents after correction by the subtraction. Even if the element values are corrected in this way, the optimum solution does not change according to the above-described first condition. Note that the element values to be corrected may be only off-diagonal elements of the submatrix 611. This is because the diagonal elements correspond to the state that violates the constraint and may not be selected in the optimum solution.

Here, it can be said that the submatrix 611 is a group of element values corresponding to the element value of the 4th row and the 3rd column of the matrix 501, of the submatrix group 600. There are some cases where the group of element values corresponding to one element value of the matrix 501, that is, the group of element values enclosed by one submatrix, of the submatrix group 600, is referred to as an "in-submatrix group".

The correction of the element values for the in-submatrix group is "in-submatrix operation". The in-submatrix operation is correction to add or subtract a same value to or from element values other than the diagonal elements in the appropriate submatrix, that is, element values of off-diagonal elements.

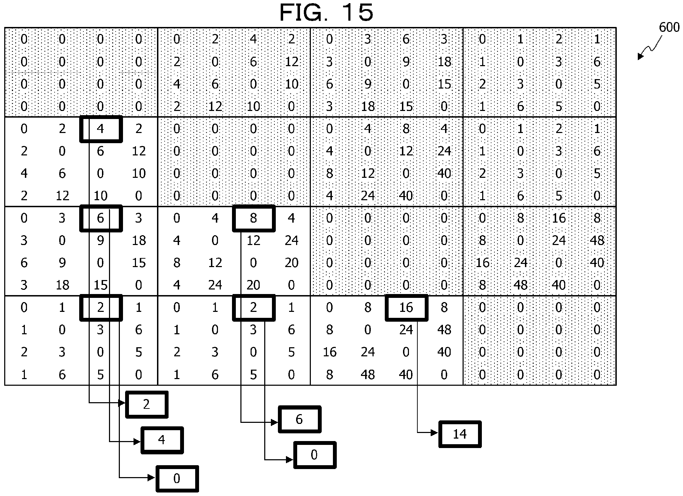

FIG. 15 is a diagram illustrating a correction example of element values (No. 2).

For example, the control unit 130 subtracts 2 from the element value of the 1st row and 3rd column of each submatrix in the part 610 of the submatrix group 600. In this case, element values to be corrected are as follows, where the element value of the matrix 501 is $f_{ij}$ and the element value of the matrix 502 is $d_{kl}$. That is, $\{f_{ij}d_{kl}\} = \{f_{21}d_{13}, f_{31}d_{13}, f_{41}d_{13}, f_{32}d_{13}, f_{42}d_{13}, f_{43}d_{13}\}$. Even if the element values are corrected in this way, the optimum solution does not change according to the above-described second condition.

Here, it can be said that the above-described element value $\{f_{ij}d_{kl}\} = \{f_{ij}d_{13}\}$ to be corrected is a group of element values corresponding to the element value $d_{13}$ of the 1st row and the 3rd column of the matrix 502, of the submatrix group 600. There are some cases where the group of element values corresponding to one element value of the matrix 502, of the submatrix group 600, is referred to as a "submatrix crossing group". The submatrix crossing group is a group of element values located at positions other than the diagonal elements of each submatrix.

The correction of the element values for the submatrix crossing group is "submatrix crossing operation". The submatrix crossing operation is correction to add or subtract a same value to or from the element value at the same position of a different submatrix.

The control unit 130 can use one of or both of the in-submatrix operation and the submatrix crossing operation.

By the correction for the submatrix group 600 by at least one of the in-submatrix operation or the submatrix crossing operation, the cost value and the energy value in the solution space can be smoothed. The correction to smooth the cost value and the energy value in the solution space in this way is called "modulation". A method of the modulation is called "modulation pattern". The following examples are conceivable as the modulation pattern. Note that the element values to be corrected in the following modulation pattern are element values other than the diagonal elements. It is not necessary to consider the diagonal elements even in the case of calculating the average value or statistical value of the element values in a group. That is, it may be considered that the diagonal elements are excluded from the group.

A first modulation pattern is correction to adjust a minimum value of the element values of each group to a predetermined value. As the predetermined value, for example, 0 is conceivable. Alternatively, the predetermined value may be another value such as the minimum value among the minimum values of the element values of each group.

A second modulation pattern is correction to make the difference in the average value of the element values of each group small. The second modulation pattern may be correction to adjust the average value of the element values of each group to the same value.

A third modulation pattern is correction to add or subtract a value based on the distribution or range of element values among groups. For example, in the third modulation pattern, the value to be added or subtracted with respect to the element values of the group to be corrected may be determined based on a statistical value such as a variance of the element values of each group, and correction may be performed such that a difference in values that the element values of each group can take is reduced. In this case, for example, correction to adjust a predetermined percentile value such as a median value (50th percentile value) or a 30th percentile value of the element values of each group to the same value is conceivable.

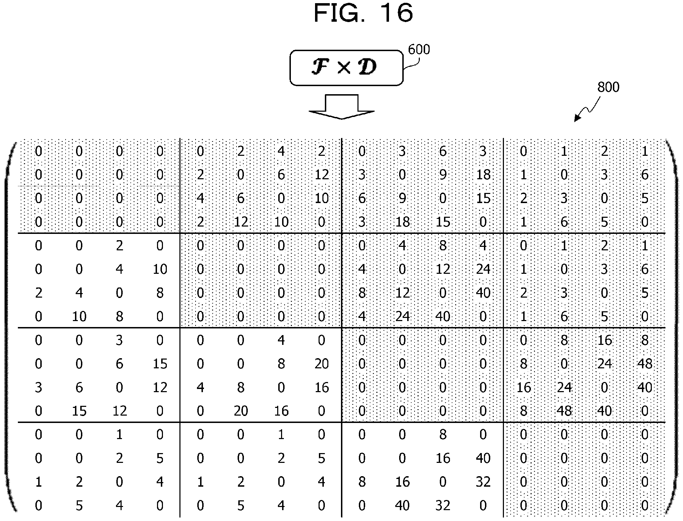

FIG. 16 is a diagram illustrating an example of a submatrix group after conversion.

For example, the control unit 130 generates a submatrix group 800 by correcting the submatrix group 600. The submatrix group 800 is a result obtained by performing the in-submatrix operation with the first modulation pattern for the part 610 of the submatrix group 600, and adjusting the minimum value of the element values of each submatrix included in the part 610 to 0.

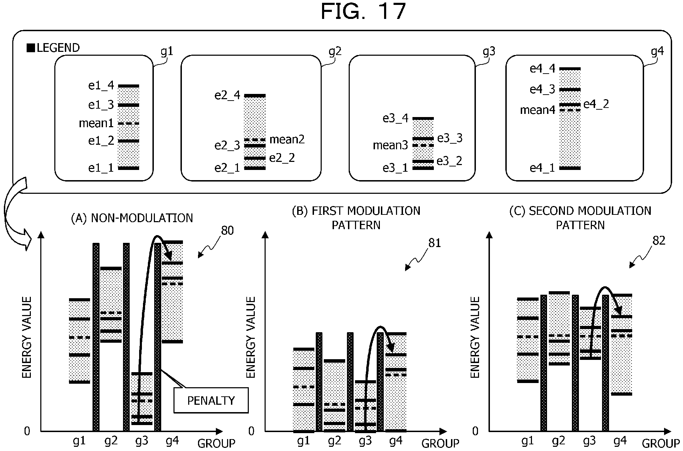

FIG. 17 is a diagram illustrating an example of smoothing of a search space.

Groups g1, g2, g3, and g4 are an in-submatrix group or a submatrix crossing group in a certain submatrix group. In FIG. 17, ranges of values that the element values of the groups g1, g2, g3, and g4 can take are illustrated as a bar graph.

The group g1 includes elements e1_1, e1_2, e1_3, and e1_4. The magnitude relationship among the values of the elements e1_1, e1_2, e1_3, and e1_4, that is, the element values is $0 < e1\_1 < e1\_2 < e1\_3 < e1\_4$. A value mean1 is an average value of the element values of the group g1.

The group g2 includes elements e2_1, e2_2, e2_3, and e2_4. The magnitude relationship among the values of the elements e2_1, e2_2, e2_3, and e2_4, that is, the element values is $0 < e2\_1 < e2\_2 < e2\_3 < e2\_4$. A value mean2 is an average value of the element values of the group g2.

The group g3 includes elements e3_1, e3_2, e3_3, and e3_4. The magnitude relationship among the values of the elements e3_1, e3_2, e3_3, and e3_4, that is, the element values is $0 < e3\_1 < e3\_2 < e3\_3 < e3\_4$. A value mean3 is an average value of the element values of the group g3.

The group g4 includes elements e4_1, e4_2, e4_3, and e4_4. The magnitude relationship among the values of the elements e4_1, e4_2, e4_3, and e4_4, that is, the element values is $0 < e4\_1 < e4\_2 < e4\_3 < e4\_4$. A value mean4 is an average value of the element values of the group g4.

FIG. 17(A) illustrates a graph 80. The graph 80 illustrates a relationship between the element values of the groups g1, g2, g3, and g4 and the penalty value in the case of non-modulation. FIG. 17(B) illustrates a graph 81. The graph 81 illustrates a relationship between the element values of the groups g1, g2, g3, and g4 and the penalty value in the case of performing correction using the first modulation pattern. FIG. 17(C) illustrates a graph 82. The graph 82 illustrates a relationship between the element values of the groups g1, g2, g3, and g4 and the penalty value in the case of performing correction using the second modulation pattern. The horizontal axis of the graphs 80, 81, and 82 represents the groups, and the vertical axis represents the energy value.

Furthermore, a bar graph illustrating the penalty term and the penalty value by the penalty term is inserted between two groups of the graphs 80, 81, and 82. The bar graph corresponding to the penalty term represents the energy barrier that must be overcome in order to transition from one state that satisfies the constraint to another state that satisfies the constraint via the state of constraint violation. In the examples of the graphs 80, 81, and 82, state transitions are illustrated as changes in the selection of element values for calculating the energy values across groups.

In the example of the graph 80, the difference in the range of the element values of the groups g1, g2, g3, and g4 is large. For example, the penalty value is determined with reference to the group g4 in which the values that the element values can take are large. Therefore, the penalty value is relatively large with respect to the element values of the group g3 in which the values that the element values can take are small, for example. Therefore, for example, for a certain bit, a relatively high energy barrier must be overcome in order to transition from a state where one element value in the group g3 is selected to a state where another element value in the group g4 is selected, and the state transition is less likely to occur.

In contrast, by correcting the element values of the groups g1, g2, g3, and g4 by the first modulation pattern, the solution space can be smoothed as illustrated in the graph 81. In the first modulation pattern, for example, the correction to subtract a value from the element values other than the diagonal elements to adjust the minimum value of the element values of each group to 0 is performed. Thereby, the difference in the value range among the groups g1, g2, g3, and g4 becomes smaller than that in the case of non-modulation. Therefore, for example, the penalty value for the element values of the group g3 in which the values that the element values can take are small becomes relatively smaller than that in the case of non-modulation. Therefore, for example, for a certain bit, the relative height of the energy barrier for transitioning from the state where one element value in the group g3 is selected to the state where another element value in the group g4 is selected can be made lower than that in the case of non-modulation. Therefore, transitions between states across the energy barrier are facilitated.

Furthermore, by correcting the element values of the groups g1, g2, g3, and g4 by the second modulation pattern, the solution space can be smoothed as illustrated in the graph 82. In the second modulation pattern, for example, the correction to add or subtract a value to the element values other than the diagonal elements to make the difference in the average value of the element values of each group small is performed. Thereby, the difference in the value range among the groups g1, g2, g3, and g4 becomes smaller than that in the case of non-modulation. Therefore, for example, the penalty value for the element values of the group g3 in which the values that the element values can take are small becomes relatively smaller than that in the case of non-modulation. Therefore, for example, for a certain bit, the relative height of the energy barrier for transitioning from the state where one element value in the group g3 is selected to the state where another element value in the group g4 is selected can be made lower than that in the case of non-modulation. Therefore, transitions between states across the energy barrier are facilitated.

Next, a processing procedure of the information processing system 50 will be described.

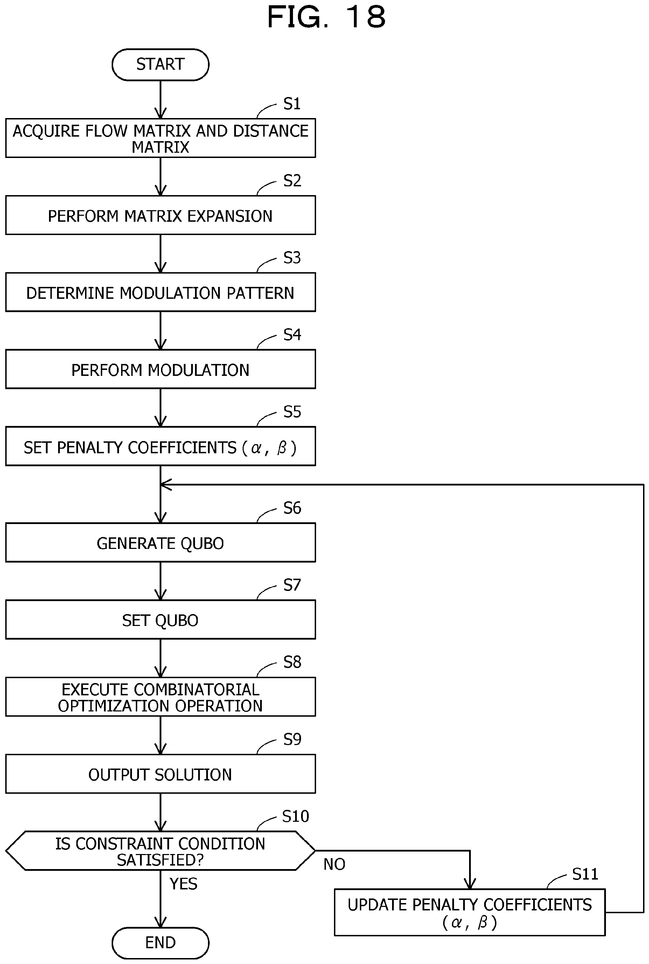

FIG. 18 is a flowchart illustrating a processing example of the information processing system.

(S1) The control unit 130 acquires the flow matrix and the distance matrix from the QAP data input by a user.

(S2) The control unit 130 performs matrix expansion. That is, the control unit 130 expands the flow matrix and the distance matrix into a submatrix group.

(S3) The control unit 130 determines the modulation pattern to be used. For example, the control unit 130 may determine the modulation pattern specified in advance by the user as the modulation pattern to be used. Alternatively, the control unit 130 may determine the modulation pattern to be used on the basis of an analysis of the submatrix group obtained in step S2. For example, the following method can be considered for determining the modulation pattern.

First, the control unit 130 determines the type of group operation.

For example, when a relatively large value is included in a submatrix of correction candidate submatrices, and the index (for example, the magnitude of the distribution, value range, or the like) representing the range of distribution of the element values in the submatrix is smaller than a first threshold value, the control unit 130 sets an element value group included in the appropriate submatrix as the in-submatrix group. In this case, the type of group operation is the in-submatrix operation.

Meanwhile, when a relatively large value is included in a submatrix of the correction candidate submatrices, and the index representing the range of distribution of the element values in the submatrix is equal to or larger than the first threshold value, there is a possibility that smoothing of the value range of the cost term becomes insufficient only with the in-submatrix group. In such a case, the control unit 130 applies the submatrix crossing group instead of or in addition to the in-submatrix group. For example, when a relatively large value is included in a submatrix crossing group of correction candidate submatrix crossing groups, and the index representing the range of distribution of the element values in the submatrix crossing group is smaller than the first threshold value, the control unit 130 may determine to perform the submatrix crossing operation for the submatrix crossing group. Alternatively, in a case where the index representing the range of distribution of the element values in the submatrix crossing group is equal to or larger than the first threshold value, the control unit 130 may determine to perform both the in-submatrix operation and the submatrix crossing operation.

Next, the control unit 130 determines the modulation pattern.

For example, the control unit 130 determines to use the first modulation pattern in a case where the difference in the indexes indicating the range of distribution of the element values between groups is smaller than a second threshold value for all combinations of groups. Furthermore, the control unit 130 determines to use the second modulation pattern in a case where the difference in the indexes indicating the range of distribution of the element values between groups is equal to or larger than the second threshold value for any combination of groups.

(S4) The control unit 130 modulates the cost value. That is, the control unit 130 corrects the element values in the submatrix group obtained in step S2 by using the modulation pattern determined in step S3. As a result, $a_{ij}b_{kl}$ of the equation (1) is determined.

(S5) The control unit 130 sets the penalty coefficients ($\alpha$, $\beta$). The control unit 130 sets the penalty coefficients $\alpha$ and $\beta$ to be values larger than values that the $a_{ij}b_{kl}$ can take in some degree. However, by modulating the cost value, the values of the penalty coefficients $\alpha$ and $\beta$ (penalty value) with respect to the cost value can be set to be relatively smaller than in the case of non-modulation. The control unit 130 sets relatively small values as the initial values of the penalty coefficients $\alpha$ and $\beta$. For example, it is conceivable that the control unit 130 sets values similar to the maximum value in the range of the cost value or values larger than the maximum value by a predetermined ratio of the maximum value as the initial values of the penalty coefficients $\alpha$ and $\beta$.

(S6) The control unit 130 generates the information of the energy function expressing the equation (1) in the QUBO format.

(S7) The control unit 130 sets the information of the energy function generated in step S6 in the search unit 210.

(S8) The search unit 210 executes the combinatorial optimization operation on the basis of the set information of the energy function. The search unit 210 searches for the solution of the QAP by the operation.

(S9) The search unit 210 outputs the solution obtained by the search to the control unit 130.

(S10) The control unit 130 acquires a solution from the search unit 210, and determines whether the acquired solution satisfies the constraint condition. In the case where the acquired solution satisfies the constraint condition, the control unit 130 outputs the solution as the final solution for the QAP to the outside via the solution output unit 140, and terminates the processing. In the case where the acquired solution does not satisfy the constraint condition, the control unit 130 proceeds to step S11.

(S11) The control unit 130 updates the penalty coefficients ($\alpha$, $\beta$). That is, the control unit 130 increases the penalty coefficients ($\alpha$, $\beta$) by a predetermined value. Note that the control unit 130 may update both $\alpha$ and $\beta$ at the same time, or may update either $\alpha$ or $\beta$ at a time. For example, as a method of updating either $\alpha$ or $\beta$, it is conceivable that the control unit 130 alternately updates α and β each time step S11 is executed. Then, the control unit 130 advances the process to step S6.

Here, in step S3, an example of determining the modulation pattern to be used from the modulation pattern candidates has been described, but the control unit 130 may use a plurality of modulation patterns in combination. For example, the control unit 130 may perform correction with the first modulation pattern and then correction with the second modulation pattern for the group to be corrected. Furthermore, the control unit 130 may perform correction with the second modulation pattern and then correction with the first modulation pattern for the group to be corrected.

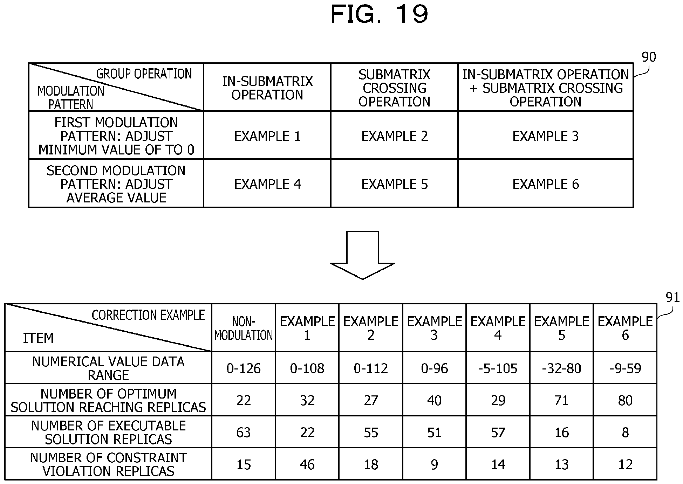

FIG. 19 is a diagram illustrating an example of a combination of the type of group operation and the modulation pattern.

There are six combinations of the type of group operation and the modulation pattern used by the control unit 130 to correct the cost value. Table 90 illustrates the six combinations.

Example 1 is a combination of the in-submatrix operation and the first modulation pattern.

Example 2 is a combination of the submatrix crossing operation and the first modulation pattern.

Example 3 is a combination of (the in-submatrix operation + the submatrix crossing operation) and the first modulation pattern. Here, (the in-submatrix operation + the submatrix crossing operation) indicates that both the in-submatrix operation and the submatrix crossing operation are used.

Example 4 is a combination of the in-submatrix operation and the second modulation pattern.

Example 5 is a combination of the submatrix crossing operation and the second modulation pattern.

Example 6 is a combination of (the in-submatrix operation + the submatrix crossing operation) and the second modulation pattern.

The target in-submatrix group for the in-submatrix operation may be all the submatrices that can be correction candidates of the submatrix group or may be a part of the submatrices. Furthermore, the target submatrix crossing group for the submatrix crossing operation may be all of groups of the element values of the submatrix group corresponding to all the element values of the distance matrix or may be a part of the groups.

Table 91 illustrates experimental results of the solution search by the search unit 210 in a case of using the examples of combinations illustrated in Table 90 for the QAP for which the optimum solution is known. The replica exchange method, which is one of the MCMC methods, is used as the search method in the search unit 210. The number of replicas in the search unit 210 is 100. Furthermore, the number of trials of the state transition in each replica, that is, the number of iterations, is $10^9$.

A column in Table 91 illustrates an example of the combination of the type of group operation and the modulation pattern used for correction, including the case of non-modulation. In the row direction of Table 91, items of a numerical value data range, the number of optimum solution reaching replicas, the number of executable solution replicas, and the number of constraint violation replicas are illustrated. The numerical value data range is the range of the element values included in the submatrix group. The number of optimum solution reaching replicas is the number of replicas that has finally reached the optimum solution. The number of executable solution replicas is the number of replicas that has finally reached a solution that is not the optimum solution but satisfies the constraint. The number of constraint violation replicas is the number of replicas that has finally reached the solution that violates the constraint.

According to Table 91, the range of the numerical value data range is narrower than that in the case of non-modulation in any combination. In particular, by using Example 3 or Example 6, the numerical value data range can be narrowed and the energy value in the solution space can be further smoothed. Furthermore, according to Table 91, it is found that there is a tendency that a more favorable result can be obtained by performing both the in-submatrix operation and the submatrix crossing operation than by performing only one of the in-submatrix operation or the submatrix crossing operation.

As described above, according to the information processing system 50, the cost value can be appropriately adjusted.

Here, when correcting parameters included in the energy function, an influence on the optimum solution becomes a problem. This is because there is a possibility that the optimum solution changes.

In contrast, the element value is not duplicately used from the above-described in-submatrix group and submatrix crossing group in the calculation of the cost value for the optimum solution. Therefore, even if the correction to add or subtract the first value to or from at least one of the in-submatrix group or the submatrix crossing group is performed, the optimum solution for the energy function in a case of not performing correction becomes the optimum solution that gives the minimum value to the energy function in a case of performing the correction. Therefore, the control unit 130 can adjust the value range of the cost term in the energy function without changing the optimum solution both in the case of not performing correction and in the case of performing correction by performing the correction by the in-submatrix operation or the submatrix crossing operation.

For example, the control unit 130 can make the value range of the cost term by the first modulation pattern or the second modulation pattern small, and can make the relative difference between the penalty coefficients α and β and each cost value in the equation (1) small. Then, transition to another state across the energy barrier based on the penalty coefficient becomes easy even from a state where the value of the energy function is relatively small, and the reachability to the optimum solution can be enhanced.

As illustrated, the control unit 130 may cause the search unit 210 to search for a solution, staring the penalty coefficients $\alpha$ and $\beta$ with small values, and cause the search unit 210 to search for a solution with large values $\alpha$ and $\beta$ in a case where the solution output from the search unit 210 does not satisfy the constraint condition. In a case where the solution output from the search unit 210 satisfies the constraint condition, the control unit 130 adopts the solution as the final solution. By controlling the penalty coefficients $\alpha$ and $\beta$ to be increased in stages from relatively small values in this way, transition from one state to another state across the energy barrier based on $\alpha$ and $\beta$ is facilitated, and the solution that satisfies the constraint condition can be efficiently searched. In this way, solution performance of the information processing system 50 can be improved.

Summarizing the above, the information processing system 50 of the second embodiment performs the following processing, for example.

The information processing system 50 solves the QAP, that is, the quadratic assignment problem by replacing the QAP with the energy function of the Ising model.

The control unit 130 acquires a plurality of matrices each obtained by the product of each of the plurality of element values of the first matrix and the second matrix. The submatrix group 600 is an example of the plurality of matrices. The control unit 130 performs, for the plurality of matrices, the correction to add or subtract the first value to or from at least one of the first group of element values corresponding to the first element value of the first matrix or the second group of element values corresponding to the second element value of the second matrix. The in-submatrix group is an example of the first group. The submatrix crossing group is an example of the second group. The control unit 130 outputs the information of the energy function obtained by formulating the QAP on the basis of the plurality of matrices after correction. The search unit 210 searches for the ground state of the Ising model on the basis of the output information of the energy function.

Therefore, the cost value can be appropriately adjusted so as not to change the optimum solution.

For example, the plurality of matrices includes a third group of element values corresponding to a third element value of the first matrix. The control unit 130 makes the difference between the reference value in the element values included in the first group and another reference value in the element values included in the third group small by the above correction. As a result, the energy value of the solution space can be smoothed.

Alternatively, the plurality of matrices includes a fourth group of element values corresponding to a fourth element value of the second matrix. The control unit 130 makes the difference between the reference value in the element values included in the second group and another reference value in the element values included in the fourth group small by the above correction. As a result, the energy value of the solution space can be smoothed.

The reference value and the another reference value may be the minimum value of the element values other than the diagonal elements of the above-described plurality of matrices included in the group to be corrected. For example, the control unit 130 may adjust the minimum value to a predetermined value by correction. Thereby, the correction to smooth the energy value of the solution space can be performed with a relatively small amount of calculation.

For example, the predetermined value may be set to zero. As a result, the energy value of the solution space can be set to a relatively small value.

Furthermore, the above-described reference value and the another reference value may be the average value of the element values included in the group to be corrected. For example, in a case where the energy value of the solution space is not able to be sufficiently smoothed only by adjusting the minimum value of the element values included in the group to be corrected to the predetermined value, it is conceivable to perform smoothing using the average value as the reference value. Note that the average value referred to here may be the average value of the element values other than the diagonal elements of the appropriate matrix. Furthermore, the diagonal elements may be excluded from the target for the correction. That is, it may be considered that the diagonal elements are excluded from the appropriate group.

For example, the control unit 130 may determine the type of the reference value and the another reference value on the basis of a difference between an index representing a range of distribution of the element values included in the first group and an index representing a range of distribution of the element values included in the third group. Thereby, the modulation pattern can be appropriately determined on the basis of the element values included in the first group and the third group.

Examples of the type of the reference value and the another reference value include the above-described minimum value, average value, percentile value, and the like. For example, the control unit 130 may determine which the minimum value of the element values included in the first group and the minimum value of the element values included in the third group, or the average value of the element values included in the first group and the average value of the element values included in the third group, as the type of the reference value and the another reference value on the basis of the difference between the index representing the range of distribution of the element values included in the first group and the index representing the range of distribution of the element values included in the third group.

More specifically, it is conceivable that the control unit 130 reduces the amount of calculation for the correction by using the minimum values as the reference values in the case where the difference is smaller than the threshold value, and preferentially achieves the smoothing by using the average values as the reference values instead of using the minimum values in the case where the difference is equal to or larger than the threshold value.

Furthermore, the control unit 130 may determine the type of the reference value and the another reference value on the basis of a difference between an index representing a range of distribution of the element values included in the second group and an index representing a range of distribution of the element values included in the fourth group. Thereby, the modulation pattern can be appropriately determined on the basis of the element values included in the second group and the fourth group.

Examples of the type of the reference value and the another reference value include the above-described minimum value, average value, percentile value, and the like. For example, the control unit 130 may determine which the minimum value of the element values included in the second group and the minimum value of the element values included in the fourth group, or the average value of the element values included in the second group and the average value of the element values included in the fourth group, as the type of the reference value and the another reference value on the basis of the difference between the index representing the range of distribution of the element values included in the second group and the index representing the range of distribution of the element values included in the fourth group.

More specifically, it is conceivable that the control unit 130 reduces the amount of calculation for the correction by using the minimum values as the reference values in the case where the difference is smaller than the threshold value, and preferentially achieves the smoothing by using the average values as the reference values instead of using the minimum values in the case where the difference is equal to or larger than the threshold value.

Furthermore, the control unit 130 may determine whether the target for the correction is the first group, the second group, or both the first group and the second group on the basis of the element values included in each of the plurality of matrices. The solution performance tends to be improved when both the first group and the second group are used for the correction, rather than when either one of the first group or the second group is used. However, it may also be favorable that the amount of calculation for the correction for the original problem is small.

Therefore, it is conceivable that the control unit 130 performs the correction, narrowing the groups into the first group corresponding to the matrix, in the case where a relatively large value is included in a matrix of the correction candidate matrices, and the index representing the range of distribution of the element values in the matrix is smaller than the threshold value. Alternatively, there is a possibility that smoothing of the cost value becomes insufficient only by the correction for the first group in the case where a relatively large value is included in a matrix of the plurality of matrices, and the index representing the range of distribution of the element values in the matrix is equal to or larger than the threshold value. In such a case, it is conceivable that the control unit 130 performs correction for the second group instead of or in addition to the correction for the first group. As a result, the energy value in the solution space can be efficiently smoothed.

Furthermore, the control unit 130 may decrease a difference between a reference value of a first type in the element values of the first group and another reference value of the first type in the element values of the third group by first-stage correction, and decreases a difference between a reference value of a second type in the element values of the first group and another reference value of the second type in the element values of the third group by another correction (second-stage correction) to add or subtract a second value to or from the first group after the first-stage correction. In this case, in the first-stage and second-stage corrections, the correction to add or subtract the value to or from the third group can also be performed.

More specifically, the control unit 130 may cause the minimum value of the element values included in the first group to match a predetermined value by correction, and decrease the difference between the average value of the element values included in the first group and the average value of the element values included in the third group by another correction to add or subtract a second value to or from the first group after correction. Alternatively, the control unit 130 may decrease a difference between the average value of the element values included in the first group and the average value of the element values included in the third group by correction, and cause the minimum value of the element values included in the first group to match a predetermined value by another correction to add or subtract the second value to or from the first group after correction. In the latter case, the predetermined value may be determined on the basis of the element values included in the first group or the element values included in the third group after the first-stage correction. In this way, by performing the two-stage corrections for the first group, it is possible to smooth the energy value near the predetermined value, for example.

Furthermore, the control unit 130 may decrease a difference between a reference value of a first type in the element values of the second group and another reference value of the first type in the element values of the fourth group by first-stage correction, and decreases a difference between a reference value of a second type in the element values of the second group and another reference value of the second type in the element values of the fourth group by another correction (second-stage correction) to add or subtract a third value to or from the second group after the first-stage correction. In this case, in the first-stage and second-stage corrections, the correction to add or subtract the value to or from the fourth group can also be performed.

More specifically, the control unit 130 may cause the minimum value of the element values included in the second group to match a predetermined value by correction, and decrease the difference between the average value of the element values included in the second group and the average value of the element values included in the fourth group by another correction to add or subtract a third value to or from the second group after correction. Alternatively, the control unit 130 may decrease a difference between the average value of the element values included in the second group and the average value of the element values included in the fourth group by correction, and cause the minimum value of the element values included in the second group to match a predetermined value by another correction to add or subtract the third value to or from the second group or the fourth group after correction. In the latter case, the predetermined value may be determined on the basis of the element values included in the second group and the element values included in the fourth group after the first-stage correction. In this way, by performing the two-stage corrections for the second group, it is possible to smooth the energy value near the predetermined value, for example.

Furthermore, the energy function includes the term representing the penalty value to be added for the constraint violation, that is, the penalty term. The control unit 130 acquires the solution obtained by the search unit 210 on the basis of the energy function, and determines whether the acquired solution violates the constraint. In the case where the acquired solution violates the constraint, the control unit 130 outputs information of another energy function with an increased penalty value to the search unit 210. Furthermore, in the case where the solution acquired from the search unit 210 does not violate the constraint, the control unit 130 outputs the acquired solution as the solution of the quadratic assignment problem.

By increasing the penalty value in stages in this way, the control unit 130 can efficiently search for the solution that satisfies the constraint while suppressing stagnation of the state transition due to the energy barrier by the penalty value. In addition, by promoting the state transition, the possibility of obtaining the ground state, that is, the optimum solution within a certain period of time increases. In this way, the solution performance can be improved.

Furthermore, the control unit 130 calculates the product of each of the plurality of elements included in the first matrix and the second matrix, and outputs the information of the energy function obtained by formulating the QAP based on the product. Regarding the product of the first element value of the plurality of elements included in the first matrix and the second matrix, the control unit 130 may calculate the product of the first element value and the second matrix after performing the correction to add or subtract the first value to or from each of the plurality of second element values of the second matrix. Even by such a method, the cost value can be adjusted without changing the optimum solution.

Note that the information processing according to the first embodiment may be achieved by causing the processing unit 12 to execute the program. Furthermore, the information processing of the second embodiment can be implemented by causing the CPU 101 to execute the program. The program can be recorded in the computer-readable recording medium 113.

For example, the program can be distributed by distributing the recording medium 113 in which the program is recorded. Alternatively, the program may be stored in another computer and distributed via a network. For example, a computer may store (install) the program, which is recorded in the recording medium 113 or received from another computer, in a storage device such as the RAM 102 or the HDD 103, read the program from the storage device, and execute the program.

**Claims**

1. An information processing system that solves a quadratic assignment problem in which a first matrix and a second matrix are used to calculate a cost value based on an energy function of an Ising model, the information processing system comprising:

   a processing unit configured to acquire a plurality of matrices each obtained by a product of each of a plurality of element values of the first matrix and the second matrix, perform, for the plurality of matrices, correction to add or subtract a first value to or from at least one of a first group of element values that corresponds to a first element value of the first matrix or a second group of element values that corresponds to a second element value of the second matrix, and output information of the energy function obtained by formulating the quadratic assignment problem based on the plurality of matrices after the correction; and
   a search unit configured to search for a ground state of the Ising model based on the output information of the energy function.

2. The information processing system according to claim 1, wherein

   the plurality of matrices includes a third group of element values that corresponds a third element value of the first matrix, and
the processing unit makes a difference between a reference value in the element values included in the first group and another reference value in the element values included in the third group small by the correction.

3. The information processing system according to claim 1, wherein

the plurality of matrices includes a fourth group of element values that corresponds a fourth element value of the second matrix, and
the processing unit makes a difference between a reference value in the element values included in the second group and another reference value in the element values included in the fourth group small by the correction.

4. The information processing system according to claim 2 or 3, wherein the reference value and the another reference value are a minimum value of element values other than a diagonal element of the plurality of matrices included in a target group for the correction.

5. The information processing system according to claim 4, wherein the processing unit causes the minimum value to match a predetermined value by the correction.

6. The information processing system according to claim 5, wherein the predetermined value is zero.

7. The information processing system according to claim 2 or 3, wherein the reference value and the another reference value are an average value of element values included in a target group for the correction.

8. The information processing system according to claim 2, wherein
the processing unit determines a type of the reference value and the another reference value based on a difference between an index that represents a range of distribution of the element values included in the first group and an index that represents a range of distribution of the element values included in the third group.

9. The information processing system according to claim 3, wherein
the processing unit determines a type of the reference value and the another reference value based on a difference between an index that represents a range of distribution of the element values included in the second group and an index that represents a range of distribution of the element values included in the fourth group.

10. The information processing system according to claim 1, wherein the processing unit determines whether the target for the correction is the first group, the second group, or both the first group and the second group on the basis of the element values included in each of the plurality of matrices.

11. The information processing system according to claim 2, wherein the processing unit decreases a difference between a reference value of a first type in the element values of the first group and another reference value of the first type in the element values of the third group by the correction, and decreases a difference between a reference value of a second type in the element values of the first group and another reference value of the second type in the element values of the third group by another correction to add or subtract a second value to or from the first group after the correction.

12. The information processing system according to claim 3, wherein the processing unit decreases a difference between a reference value of a first type in the element values of the second group and another reference value of the first type in the element values of the fourth group by the correction, and decreases a difference between a reference value of a second type in the element values of the second group and another reference value of the second type in the element values of the fourth group by another correction to add or subtract a third value to or from the second group after the correction.

13. The information processing system according to claim 1, wherein

the energy function includes a term that represents a penalty value to be added for constraint violation, and
the processing unit acquires a solution that the search unit has obtained based on the energy function, outputs information of another energy function with the increased penalty value to the search unit in a case where the acquired solution violates a constraint, and outputs the solution as a solution for the quadratic assignment problem in a case where the acquired solution does not violate the constraint.

14. An information processing method that solves a quadratic assignment problem in which a first matrix and a second matrix are used to calculate a cost value based on an energy function of an Ising model, the information processing system comprising:

acquiring a plurality of matrices each obtained by a product of each of a plurality of element values of the first matrix and the second matrix;

performing, for the plurality of matrices, correction to add or subtract a first value to or from at least one of a first group of element values that corresponds to a first element value of the first matrix or a second group of element values that corresponds to a second element value of the second matrix; and

searching for a ground state of the Ising model based on the information of the energy function obtained by formulating the quadratic assignment problem based on the plurality of matrices after the correction.

15. A program in which a computer included in an information processing system that solves a quadratic assignment problem in which a first matrix and a second matrix are used to calculate a cost value based on an energy function of an Ising model performs processing of:

acquiring a plurality of matrices each obtained by a product of each of a plurality of element values of the first matrix and the second matrix;

performing, for the plurality of matrices, correction to add or subtract a first value to or from at least one of a first group of element values that corresponds to a first element value of the first matrix or a second group of element values that corresponds to a second element value of the second matrix; and

outputting information of the energy function obtained by formulating the quadratic assignment problem based on the plurality of matrices after the correction.

# FIG. 1

# FIG. 2

# FIG. 3

30

| 0 | 0 | 0 | 0 | $a_{12}b_{12}$ | $a_{12}b_{13}$ | 0 | $a_{13}b_{12}$ | $a_{13}b_{13}$ |
|---|---|---|---|---|---|---|---|---|
| 0 | 0 | 0 | $a_{12}b_{21}$ | 0 | $a_{12}b_{23}$ | $a_{13}b_{21}$ | 0 | $a_{13}b_{23}$ |
| 0 | 0 | 0 | $a_{12}b_{31}$ | $a_{12}b_{32}$ | 0 | $a_{13}b_{31}$ | $a_{13}b_{32}$ | 0 |
| 0 | $a_{21}b_{12}$ | $a_{21}b_{13}$ | 0 | 0 | 0 | 0 | $a_{23}b_{12}$ | $a_{23}b_{13}$ |
| $a_{21}b_{21}$ | 0 | $a_{21}b_{23}$ | 0 | 0 | 0 | $a_{23}b_{21}$ | 0 | $a_{23}b_{23}$ |
| $a_{21}b_{31}$ | $a_{21}b_{32}$ | 0 | 0 | 0 | 0 | $a_{23}b_{31}$ | $a_{23}b_{32}$ | 0 |
| 0 | $a_{31}b_{12}$ | $a_{31}b_{13}$ | 0 | $a_{32}b_{12}$ | $a_{32}b_{13}$ | 0 | 0 | 0 |
| $a_{31}b_{21}$ | 0 | $a_{31}b_{23}$ | $a_{32}b_{21}$ | 0 | $a_{32}b_{23}$ | 0 | 0 | 0 |
| $a_{31}b_{31}$ | $a_{31}b_{32}$ | 0 | $a_{32}b_{31}$ | $a_{32}b_{32}$ | 0 | 0 | 0 | 0 |

321 — $a_{21}b_{12}$

331 — $a_{31}b_{12}$

361

30b

| 0 | 0 | 0 | 0 | $a_{12}b_{12}$ | $a_{12}b_{13}$ | 0 | $a_{13}b_{12}$ | $a_{13}b_{13}$ |
|---|---|---|---|---|---|---|---|---|
| 0 | 0 | 0 | $a_{12}b_{21}$ | 0 | $a_{12}b_{23}$ | $a_{13}b_{21}$ | 0 | $a_{13}b_{23}$ |
| 0 | 0 | 0 | $a_{12}b_{31}$ | $a_{12}b_{32}$ | 0 | $a_{13}b_{31}$ | $a_{13}b_{32}$ | 0 |
| 0 | $a_{21}b_{12}-c2$ | $a_{21}b_{13}$ | 0 | 0 | 0 | 0 | $a_{23}b_{12}$ | $a_{23}b_{13}$ |
| $a_{21}b_{21}$ | 0 | $a_{21}b_{23}$ | 0 | 0 | 0 | $a_{23}b_{21}$ | 0 | $a_{23}b_{23}$ |
| $a_{21}b_{31}$ | $a_{21}b_{32}$ | 0 | 0 | 0 | 0 | $a_{23}b_{31}$ | $a_{23}b_{32}$ | 0 |
| 0 | $a_{31}b_{12}-c2$ | $a_{31}b_{13}$ | 0 | $a_{32}b_{12}-c2$ | $a_{32}b_{13}$ | 0 | 0 | 0 |
| $a_{31}b_{21}$ | 0 | $a_{31}b_{23}$ | $a_{32}b_{21}$ | 0 | $a_{32}b_{23}$ | 0 | 0 | 0 |
| $a_{31}b_{31}$ | $a_{31}b_{32}$ | 0 | $a_{32}b_{31}$ | $a_{32}b_{32}$ | 0 | 0 | 0 | 0 |

321b

331b

361b

# FIG. 4

# FIG. 5

INFORMATION PROCESSING SYSTEM 50

INFORMATION PROCESSING DEVICE 100

CPU 101

IMAGE SIGNAL PROCESSING UNIT 105 — 111

RAM 102

INPUT SIGNAL PROCESSING UNIT 106 — 112

HDD 103

MEDIUM READER 107 — 113

IO INTERFACE 104

NIC 108 — NETWORK 60

OPTIMIZATION DEVICE 200

FPGA 201

RAM 202

# FIG. 6

$B=b_{kl}$ 402

| | I | II | III | IV |
|---|---|---|---|---|
| I | | 4 | 5 | 3 |
| II | 4 | | 1 | 2 |
| III | 5 | 1 | | 2 |
| IV | 3 | 2 | 2 | |

Cost = 7×4 + 1×5 + 2×3 +
        3×1 + 4×2 + 5×2 = 60

$A=a_{ij}$ 401

| | A | B | C | D |
|---|---|---|---|---|
| A | | 7 | 1 | 2 |
| B | 7 | | 3 | 4 |
| C | 1 | 3 | | 5 |
| D | 2 | 4 | 5 | |

403

| | II | III | IV | I |
|---|---|---|---|---|
| II | | 1 | 2 | 4 |
| III | 1 | | 2 | 5 |
| IV | 2 | 2 | | 3 |
| I | 4 | 5 | 3 | |

Cost = 7×1 + 1×2 + 2×4 +
        3×2 + 4×5 + 5×3 = 58

# FIG. 7

404

$$X= \begin{array}{|c|c|c|c|c|}
\hline
x_{ik} & \text{I} & \text{II} & \text{III} & \text{IV} \\
\hline
\text{A} & 0 & 0 & 0 & 1 \\
\hline
\text{B} & 1 & 0 & 0 & 0 \\
\hline
\text{C} & 0 & 0 & 1 & 0 \\
\hline
\text{D} & 0 & 1 & 0 & 0 \\
\hline
\end{array}$$

# FIG. 8

50

## INFORMATION PROCESSING DEVICE 100

| STORAGE UNIT 120 | — | CONTROL UNIT 130 | — | SOLUTION OUTPUT UNIT 140 |

## OPTIMIZATION DEVICE 200

SEARCH UNIT 210

# FIG. 9

410

CONSTRAINT TERM: $\alpha \sum_{k=1}^{n}\left(1-\sum_{i=1}^{n} x_{ik}\right)^2 + \beta \sum_{i=1}^{n}\left(1-\sum_{k=1}^{n} x_{ik}\right)^2$

| | k | |
|---|---|---|
| i | | |

STATE: CONSTRAINT VIOLATION eg

1: 0
CONSTRAINT OK

2: $\alpha + \beta$
CONSTRAINT VIOLATION

3: $2(\alpha + \beta)$
CONSTRAINT VIOLATION

4: $\alpha + \beta$
CONSTRAINT VIOLATION

5: 0
CONSTRAINT OK

FIG. 10

# FIG. 11

501

502

$$\mathcal{F} = \begin{pmatrix} 0 & 2 & 3 & 1 \\ 2 & 0 & 4 & 1 \\ 3 & 4 & 0 & 8 \\ 1 & 1 & 8 & 0 \end{pmatrix} \quad \mathcal{D} = \begin{pmatrix} 0 & 1 & 2 & 1 \\ 1 & 0 & 3 & 6 \\ 2 & 3 & 0 & 5 \\ 1 & 6 & 5 & 0 \end{pmatrix}$$

600

601

$$\mathcal{F} \times \mathcal{D} = \begin{pmatrix} 0\mathcal{D} & 2\mathcal{D} & 3\mathcal{D} & 1\mathcal{D} \\ 2\mathcal{D} & 0\mathcal{D} & 4\mathcal{D} & 1\mathcal{D} \\ 3\mathcal{D} & 4\mathcal{D} & 0\mathcal{D} & 8\mathcal{D} \\ 1\mathcal{D} & 1\mathcal{D} & 8\mathcal{D} & 0\mathcal{D} \end{pmatrix} = \begin{pmatrix} \begin{array}{cccc|cccc|cccc|cccc} 0 & 0 & 0 & 0 & 0 & 2 & 4 & 2 & 0 & 3 & 6 & 3 & 0 & 1 & 2 & 1 \\ 0 & 0 & 0 & 0 & 2 & 0 & 6 & 12 & 3 & 0 & 9 & 18 & 1 & 0 & 3 & 6 \\ 0 & 0 & 0 & 0 & 4 & 6 & 0 & 10 & 6 & 9 & 0 & 15 & 2 & 3 & 0 & 5 \\ 0 & 0 & 0 & 0 & 2 & 12 & 10 & 0 & 3 & 18 & 15 & 0 & 1 & 6 & 5 & 0 \\ \hline 0 & 2 & 4 & 2 & 0 & 0 & 0 & 0 & 0 & 4 & 8 & 4 & 0 & 1 & 2 & 1 \\ 2 & 0 & 6 & 12 & 0 & 0 & 0 & 0 & 4 & 0 & 12 & 24 & 1 & 0 & 3 & 6 \\ 4 & 6 & 0 & 10 & 0 & 0 & 0 & 0 & 8 & 12 & 0 & 20 & 2 & 3 & 0 & 5 \\ 2 & 12 & 10 & 0 & 0 & 0 & 0 & 0 & 4 & 24 & 20 & 0 & 1 & 6 & 5 & 0 \\ \hline 0 & 3 & 6 & 3 & 0 & 4 & 8 & 4 & 0 & 0 & 0 & 0 & 0 & 8 & 16 & 8 \\ 3 & 0 & 9 & 18 & 4 & 0 & 12 & 24 & 0 & 0 & 0 & 0 & 8 & 0 & 24 & 48 \\ 6 & 9 & 0 & 15 & 8 & 12 & 0 & 20 & 0 & 0 & 0 & 0 & 16 & 24 & 0 & 40 \\ 3 & 18 & 15 & 0 & 4 & 24 & 20 & 0 & 0 & 0 & 0 & 0 & 8 & 48 & 40 & 0 \\ \hline 0 & 1 & 2 & 1 & 0 & 1 & 2 & 1 & 0 & 8 & 16 & 8 & 0 & 0 & 0 & 0 \\ 1 & 0 & 3 & 6 & 1 & 0 & 3 & 6 & 8 & 0 & 24 & 48 & 0 & 0 & 0 & 0 \\ 2 & 3 & 0 & 5 & 2 & 3 & 0 & 5 & 16 & 24 & 0 & 40 & 0 & 0 & 0 & 0 \\ 1 & 6 & 5 & 0 & 1 & 6 & 5 & 0 & 8 & 48 & 40 & 0 & 0 & 0 & 0 & 0 \end{array} \end{pmatrix}$$

# FIG. 12

700

$$X_{(x_{ik})} = \begin{pmatrix} 0 & 0 & 1 & 0 \\ 0 & 1 & 0 & 0 \\ 1 & 0 & 0 & 0 \\ 0 & 0 & 0 & 1 \end{pmatrix}$$

701

$$\begin{pmatrix} 0 \\ 0 \\ 1 \\ 0 \\ \hline 0 \\ 1 \\ 0 \\ 0 \\ \hline 1 \\ 0 \\ 0 \\ 0 \\ \hline 0 \\ 0 \\ 0 \\ 1 \end{pmatrix}$$

## FIG. 13

600a

| | | $x_{11}$ | $x_{21}$ | $x_{31}$ | $x_{41}$ | $x_{12}$ | $x_{22}$ | $x_{32}$ | $x_{42}$ | $x_{13}$ | $x_{23}$ | $x_{33}$ | $x_{43}$ | $x_{14}$ | $x_{24}$ | $x_{34}$ | $x_{44}$ |
|---|---|---|---|---|---|---|---|---|---|---|---|---|---|---|---|---|---|
| | | 0 | 0 | 1 | 0 | 0 | 1 | 0 | 0 | 1 | 0 | 0 | 0 | 0 | 0 | 0 | 1 |
| $x_{11}$ | 0 | 0 | 0 | 0 | 0 | 0 | 2 | 4 | 2 | 0 | 3 | 6 | 3 | 0 | 1 | 2 | 1 |
| $x_{21}$ | 0 | 0 | 0 | 0 | 0 | 2 | 0 | 6 | 12 | 3 | 0 | 9 | 18 | 1 | 0 | 3 | 6 |
| $x_{31}$ | 1 | 0 | 0 | 0 | 0 | 4 | 6 | 0 | 10 | 6 | 9 | 0 | 15 | 2 | 3 | 0 | 5 |
| $x_{41}$ | 0 | 0 | 0 | 0 | 0 | 2 | 12 | 10 | 0 | 3 | 18 | 15 | 0 | 1 | 6 | 5 | 0 |
| $x_{12}$ | 0 | 0 | 2 | 4 | 2 | 0 | 0 | 0 | 0 | 0 | 4 | 8 | 4 | 0 | 1 | 2 | 1 |
| $x_{22}$ | 1 | 2 | 0 | 6 | 12 | 0 | 0 | 0 | 0 | 4 | 0 | 12 | 24 | 1 | 0 | 3 | 6 |
| $x_{32}$ | 0 | 4 | 6 | 0 | 10 | 0 | 0 | 0 | 0 | 8 | 12 | 0 | 40 | 2 | 3 | 0 | 5 |
| $x_{42}$ | 0 | 2 | 12 | 10 | 0 | 0 | 0 | 0 | 0 | 4 | 24 | 40 | 0 | 1 | 6 | 5 | 0 |
| $x_{13}$ | 1 | 0 | 3 | 6 | 3 | 0 | 4 | 8 | 4 | 0 | 0 | 0 | 0 | 0 | 8 | 16 | 8 |
| $x_{23}$ | 0 | 3 | 0 | 9 | 18 | 4 | 0 | 12 | 24 | 0 | 0 | 0 | 0 | 8 | 0 | 24 | 48 |
| $x_{33}$ | 0 | 6 | 9 | 0 | 15 | 8 | 12 | 0 | 20 | 0 | 0 | 0 | 0 | 16 | 24 | 0 | 40 |
| $x_{43}$ | 0 | 3 | 18 | 15 | 0 | 4 | 24 | 20 | 0 | 0 | 0 | 0 | 0 | 8 | 48 | 40 | 0 |
| $x_{14}$ | 0 | 0 | 1 | 2 | 1 | 0 | 1 | 2 | 1 | 0 | 8 | 16 | 8 | 0 | 0 | 0 | 0 |
| $x_{24}$ | 0 | 1 | 0 | 3 | 6 | 1 | 0 | 3 | 6 | 8 | 0 | 24 | 48 | 0 | 0 | 0 | 0 |
| $x_{34}$ | 0 | 2 | 3 | 0 | 5 | 2 | 3 | 0 | 5 | 16 | 24 | 0 | 40 | 0 | 0 | 0 | 0 |
| $x_{44}$ | 1 | 1 | 6 | 5 | 0 | 1 | 6 | 5 | 0 | 8 | 48 | 40 | 0 | 0 | 0 | 0 | 0 |

610

FIG. 14

## FIG. 15

600

| 0 | 0 | 0 | 0 | 0 | 2 | 4 | 2 | 0 | 3 | 6 | 3 | 0 | 1 | 2 | 1 |
|---|---|---|---|---|---|---|---|---|---|---|---|---|---|---|---|
| 0 | 0 | 0 | 0 | 2 | 0 | 6 | 12 | 3 | 0 | 9 | 18 | 1 | 0 | 3 | 6 |
| 0 | 0 | 0 | 0 | 4 | 6 | 0 | 10 | 6 | 9 | 0 | 15 | 2 | 3 | 0 | 5 |
| 0 | 0 | 0 | 0 | 2 | 12 | 10 | 0 | 3 | 18 | 15 | 0 | 1 | 6 | 5 | 0 |
| 0 | 2 | **4** | 2 | 0 | 0 | 0 | 0 | 0 | 4 | 8 | 4 | 0 | 1 | 2 | 1 |
| 2 | 0 | 6 | 12 | 0 | 0 | 0 | 0 | 4 | 0 | 12 | 24 | 1 | 0 | 3 | 6 |
| 4 | 6 | 0 | 10 | 0 | 0 | 0 | 0 | 8 | 12 | 0 | 40 | 2 | 3 | 0 | 5 |
| 2 | 12 | 10 | 0 | 0 | 0 | 0 | 0 | 4 | 24 | 40 | 0 | 1 | 6 | 5 | 0 |
| 0 | 3 | **6** | 3 | 0 | 4 | **8** | 4 | 0 | 0 | 0 | 0 | 0 | 8 | 16 | 8 |
| 3 | 0 | 9 | 18 | 4 | 0 | 12 | 24 | 0 | 0 | 0 | 0 | 8 | 0 | 24 | 48 |
| 6 | 9 | 0 | 15 | 8 | 12 | 0 | 20 | 0 | 0 | 0 | 0 | 16 | 24 | 0 | 40 |
| 3 | 18 | 15 | 0 | 4 | 24 | 20 | 0 | 0 | 0 | 0 | 0 | 8 | 48 | 40 | 0 |
| 0 | 1 | **2** | 1 | 0 | 1 | **2** | 1 | 0 | 8 | **16** | 8 | 0 | 0 | 0 | 0 |
| 1 | 0 | 3 | 6 | 1 | 0 | 3 | 6 | 8 | 0 | 24 | 48 | 0 | 0 | 0 | 0 |
| 2 | 3 | 0 | 5 | 2 | 3 | 0 | 5 | 16 | 24 | 0 | 40 | 0 | 0 | 0 | 0 |
| 1 | 6 | 5 | 0 | 1 | 6 | 5 | 0 | 8 | 48 | 40 | 0 | 0 | 0 | 0 | 0 |

| 2 |
|---|

| 4 |
|---|

| 0 |
|---|

| 6 |
|---|

| 0 |
|---|

| 14 |
|---|

# FIG. 16

$$\mathcal{F} \times \mathcal{D} \quad 600$$

800

$$
\begin{pmatrix}
0 & 0 & 0 & 0 & 0 & 2 & 4 & 2 & 0 & 3 & 6 & 3 & 0 & 1 & 2 & 1 \\
0 & 0 & 0 & 0 & 2 & 0 & 6 & 12 & 3 & 0 & 9 & 18 & 1 & 0 & 3 & 6 \\
0 & 0 & 0 & 0 & 4 & 6 & 0 & 10 & 6 & 9 & 0 & 15 & 2 & 3 & 0 & 5 \\
0 & 0 & 0 & 0 & 2 & 12 & 10 & 0 & 3 & 18 & 15 & 0 & 1 & 6 & 5 & 0 \\
0 & 0 & 2 & 0 & 0 & 0 & 0 & 0 & 0 & 4 & 8 & 4 & 0 & 1 & 2 & 1 \\
0 & 0 & 4 & 10 & 0 & 0 & 0 & 0 & 4 & 0 & 12 & 24 & 1 & 0 & 3 & 6 \\
2 & 4 & 0 & 8 & 0 & 0 & 0 & 0 & 8 & 12 & 0 & 40 & 2 & 3 & 0 & 5 \\
0 & 10 & 8 & 0 & 0 & 0 & 0 & 0 & 4 & 24 & 40 & 0 & 1 & 6 & 5 & 0 \\
0 & 0 & 3 & 0 & 0 & 0 & 4 & 0 & 0 & 0 & 0 & 0 & 0 & 8 & 16 & 8 \\
0 & 0 & 6 & 15 & 0 & 0 & 8 & 20 & 0 & 0 & 0 & 0 & 8 & 0 & 24 & 48 \\
3 & 6 & 0 & 12 & 4 & 8 & 0 & 16 & 0 & 0 & 0 & 0 & 16 & 24 & 0 & 40 \\
0 & 15 & 12 & 0 & 0 & 20 & 16 & 0 & 0 & 0 & 0 & 0 & 8 & 48 & 40 & 0 \\
0 & 0 & 1 & 0 & 0 & 0 & 1 & 0 & 0 & 0 & 8 & 0 & 0 & 0 & 0 & 0 \\
0 & 0 & 2 & 5 & 0 & 0 & 2 & 5 & 0 & 0 & 16 & 40 & 0 & 0 & 0 & 0 \\
1 & 2 & 0 & 4 & 1 & 2 & 0 & 4 & 8 & 16 & 0 & 32 & 0 & 0 & 0 & 0 \\
0 & 5 & 4 & 0 & 0 & 5 & 4 & 0 & 0 & 40 & 32 & 0 & 0 & 0 & 0 & 0
\end{pmatrix}
$$

# FIG. 17

# FIG. 18

```
        ┌─────────┐
        │  START  │
        └────┬────┘
             │                    S1
  ┌──────────▼──────────────────┐
  │  ACQUIRE FLOW MATRIX AND     │
  │         DISTANCE MATRIX      │
  └──────────┬──────────────────┘
             │                    S2
  ┌──────────▼──────────────────┐
  │  PERFORM MATRIX EXPANSION    │
  └──────────┬──────────────────┘
             │                    S3
  ┌──────────▼──────────────────┐
  │  DETERMINE MODULATION PATTERN│
  └──────────┬──────────────────┘
             │                    S4
  ┌──────────▼──────────────────┐
  │      PERFORM MODULATION      │
  └──────────┬──────────────────┘
             │                    S5
  ┌──────────▼──────────────────┐
  │ SET PENALTY COEFFICIENTS (α, β)│
  └──────────┬──────────────────┘
             │                    S6
  ┌──────────▼──────────────────┐
  │        GENERATE QUBO         │
  └──────────┬──────────────────┘
             │                    S7
  ┌──────────▼──────────────────┐
  │          SET QUBO            │
  └──────────┬──────────────────┘
             │                    S8
  ┌──────────▼──────────────────┐
  │  EXECUTE COMBINATORIAL       │
  │    OPTIMIZATION OPERATION    │
  └──────────┬──────────────────┘
             │                    S9
  ┌──────────▼──────────────────┐
  │       OUTPUT SOLUTION        │
  └──────────┬──────────────────┘
             │                    S10
  ┌──────────▼──────────────────┐
  │  IS CONSTRAINT CONDITION     │─── NO
  │       SATISFIED?             │
  └──────────┬──────────────────┘
           YES
        ┌────▼────┐
        │   END   │
        └─────────┘
```

SET PENALTY COEFFICIENTS ($\alpha$, $\beta$)

GENERATE QUBO

SET QUBO

EXECUTE COMBINATORIAL OPTIMIZATION OPERATION

OUTPUT SOLUTION

IS CONSTRAINT CONDITION SATISFIED?

S11
UPDATE PENALTY COEFFICIENTS ($\alpha$, $\beta$)

# FIG. 19

| GROUP OPERATION / MODULATION PATTERN | IN-SUBMATRIX OPERATION | SUBMATRIX CROSSING OPERATION | IN-SUBMATRIX OPERATION + SUBMATRIX CROSSING OPERATION |
|---|---|---|---|
| FIRST MODULATION PATTERN: ADJUST MINIMUM VALUE OF TO 0 | EXAMPLE 1 | EXAMPLE 2 | EXAMPLE 3 |
| SECOND MODULATION PATTERN: ADJUST AVERAGE VALUE | EXAMPLE 4 | EXAMPLE 5 | EXAMPLE 6 |

90

| CORRECTION EXAMPLE / ITEM | NON-MODULATION | EXAMPLE 1 | EXAMPLE 2 | EXAMPLE 3 | EXAMPLE 4 | EXAMPLE 5 | EXAMPLE 6 |
|---|---|---|---|---|---|---|---|
| NUMERICAL VALUE DATA RANGE | 0-126 | 0-108 | 0-112 | 0-96 | -5-105 | -32-80 | -9-59 |
| NUMBER OF OPTIMUM SOLUTION REACHING REPLICAS | 22 | 32 | 27 | 40 | 29 | 71 | 80 |
| NUMBER OF EXECUTABLE SOLUTION REPLICAS | 63 | 22 | 55 | 51 | 57 | 16 | 8 |
| NUMBER OF CONSTRAINT VIOLATION REPLICAS | 15 | 46 | 18 | 9 | 14 | 13 | 12 |

91

Europäisches
Patentamt

European
Patent Office

Office européen
des brevets

# EUROPEAN SEARCH REPORT

Application Number

EP 21 18 3116

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2020/028453 A1 (UNIV TOKYO [JP]; JAPAN SCIENCE & TECH AGENCY [JP] ET AL.) 6 February 2020 (2020-02-06) * abstract; figures 2, 3 * * page 3, paragraph 2 * * page 4 – page 5 * * page 6, paragraphs 4, 5 * * page 10, paragraph 6 – page 16, paragraph 3 * * page 17 – page 24 * * pages 27, 35 * ----- | 1-15 | INV. G06N5/00 G06N7/00 |
| X | Zhengbing Bian ET AL: "The Ising model: teaching an old problem new tricks", , 30 August 2010 (2010-08-30), XP055575648, Retrieved from the Internet: URL:https://www.dwavesys.com/sites/default /files/weightedmaxsat_v2.pdf [retrieved on 2019-03-29] * paragraphs [0001], [02.1], [02.2], [03.2], [4.1.1] * * abstract * ----- | 1,14,15 | |
| X | US 2019/164418 A1 (NEUKART FLORIAN [US] ET AL) 30 May 2019 (2019-05-30) * paragraphs [0006] – [0009], [0046] – [0057], [0071] – [0104] * * abstract; figures 1, 8-10 * ----- -/-- | 1,14,15 | |

TECHNICAL FIELDS SEARCHED (IPC)

G06N

The present search report has been drawn up for all claims

| Place of search | Date of completion of the search | Examiner |
|---|---|---|
| Munich | 28 January 2022 | Cakiroglu Garton, S |

EPO FORM 1503 03.82 (P04C01)

**page 1 of 2**

Europäisches
Patentamt

European
Patent Office

Office européen
des brevets

# EUROPEAN SEARCH REPORT

Application Number

EP 21 18 3116

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | KANAMARU SHO ET AL: "Mapping Constrained Slot-Placement Problems to Ising Models and its Evaluations by an Ising Machine", 2019 IEEE 9TH INTERNATIONAL CONFERENCE ON CONSUMER ELECTRONICS (ICCE-BERLIN), IEEE, 8 September 2019 (2019-09-08), pages 221-226, XP033694054, DOI: 10.1109/ICCE-BERLIN47944.2019.8966207 [retrieved on 2020-01-21] * the whole document * ----- | 1-15 | |
| | | | **TECHNICAL FIELDS SEARCHED (IPC)** |

The present search report has been drawn up for all claims

| Place of search | Date of completion of the search | Examiner |
|---|---|---|
| Munich | 28 January 2022 | Cakiroglu Garton, S |

EPO FORM 1503 03.82 (P04C01)

## ANNEX TO THE EUROPEAN SEARCH REPORT
## ON EUROPEAN PATENT APPLICATION NO.

EP 21 18 3116

This annex lists the patent family members relating to the patent documents cited in the above-mentioned European search report.
The members are as contained in the European Patent Office EDP file on
The European Patent Office is in no way liable for these particulars which are merely given for the purpose of information.

28-01-2022

| Patent document cited in search report | | Publication date | Patent family member(s) | | Publication date |
|---|---|---|---|---|---|
| WO 2020028453 | A1 | 06-02-2020 | CN | 112543943 A | 23-03-2021 |
| | | | US | 2021350267 A1 | 11-11-2021 |
| | | | WO | 2020027785 A1 | 06-02-2020 |
| | | | WO | 2020028453 A1 | 06-02-2020 |
| US 2019164418 | A1 | 30-05-2019 | CN | 111566709 A | 21-08-2020 |
| | | | EP | 3718096 A1 | 07-10-2020 |
| | | | US | 2019164418 A1 | 30-05-2019 |
| | | | WO | 2019105971 A1 | 06-06-2019 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007317185 A

- US 20070156471